# EUROPÄISCHE PATENTSCHRIFT

(11) **EP 1 832 200 B1**
(45) Veröffentlichungstag und Bekanntmachung des Hinweises auf die Patenterteilung: **21.01.2009**
(21) Anmeldenummer: 07004955.6
(22) Anmeldetag: 09.03.2007
(51) Int. Cl.: A47B 81/00, B60R 7/14, F41A 23/18, F41C 33/06, F41A 17/44

(54) **Vorrichtung und Sicherungseinheit zur Aufbewahrung einer Schusswaffe**
Device and safety unit for storing a firearm
Dispositif et unité de sécurité destinés à la conservation d'une arme de tir

(30) Priorität: 10.03.2006 DE 102006011266
(43) Veröffentlichungstag der Anmeldung: 12.09.2007
(73) Patentinhaber: Armatix GmbH, 85774 Unterföhring (DE)
(72) Erfinder: Giebel, Karl-Friedrich, Dr., 83026 Rosenheim (DE); Mauch, Ernst, 78655 Dunningen (DE); Graser, Daniel, 85716 Unterschleißheim (DE); Parhofer, Stefan, Dr., 81547 München (DE); Pavlicic, Vaso, 81739 München (DE); Steuwer, Dirk, 81929 München (DE)
(74) Vertreter: von Pichler, Cletus

(56) Entgegenhaltungen:
- AT-U1- 7 955
- DE-A1- 10 231 685
- DE-A1- 10 240 119
- US-A- 2 327 334
- US-A- 2 758 762
- US-A- 2 803 909
- US-A- 5 044 106

## Beschreibung

### Gebiet der Erfindung

Die vorliegende Erfindung betrifft im Allgemeinen eine Vorrichtung zur Aufbewahrung einer Schusswaffe und insbesondere eine Vorrichtung, um Schusswaffen gesichert gegen eine unbefugte Entnahme aufzubewahren und deren Entnahme und gegebenenfalls deren Betrieb nur befugten Personen zu ermöglichen.

### Hintergrund der Erfindung

Um Schusswaffen gesichert aufzubewahren und nur befugten Personen Zugriff auf diese zu ermöglichen, werden im Allgemeinen Waffenschränke, Waffentresore, Waffenkoffer und andere Einrichtungen verwendet, in denen Schusswaffen eingeschlossen werden. Befugte Personen können auf so aufbewahrte Schusswaffen zugreifen, wenn sie im Besitz passender Schlüssel, Zahlenkombinationen, Kodes und/oder weiterer eine Zugangsberechtigung angebender Mittel sind und/oder entsprechende biometrische Daten dieser Personen erfasst und erfolgreich geprüft wurden. Eine solche eingeschlossene Aufbewahrung ist nicht geeignet,
wenn Schusswaffen sichtbar und gleichzeitig vor unberechtigtem Zugriff geschützt aufbewahrt werden sollen. Ein weiterer Nachteil besteht darin, dass solche Aufbewahrungsvorrichtungen gewaltsam geöffnet werden können, wodurch freier Zugriff auf üblicherweise ansonsten ungesicherte, also betriebsfähige Schusswaffen möglich wird.

Um Schusswaffen geschützt vor unberechtigter Entnahme, aber sichtbar aufzubewahren, werden üblicherweise Vorrichtungen verwendet, die Schusswaffen beispielsweise unter Verwendung von Bügeln, Klammern, Ketten und dergleichen sichern. Ein Nachteil besteht hierbei zum Teil darin, dass Schusswaffen nur teilweise sichtbar sind, weil beispielsweise eine zur Befestigung dienende Halterung eine Schusswaffenseite vollständig bedeckt. Ein weiterer Nachteil besteht hierbei ebenfalls darin, dass gesicherte Befestigungen von unbefugten Personen - meist sehr einfach - gewaltsam geöffnet werden können, wodurch im Allgemeinen nicht nur eine unbefugte Entnahme, sondern auch ein unbefugter Betrieb möglich ist.

Derartige Nachteile bestehen auch bei Vorrichtungen, die beim Tragen von Schusswaffen von deren Benutzern verwendet werden, wie z.B. Holster für Faustfeuerwaffen. Bei solchen Vorrichtungen ist es bekannt, Schusswaffen in einem zur Schusswaffenaufbewahrung vorgesehenen Raum (z.B. Hohlraum/Tasche eines Holsters) mechanisch zu sichern, indem Arretierungen, Verschlüsse, Haken und dergleichen am Lauf, am Griffund/oder im Bereich des Abzugs einer Schusswaffe angreifen und eine Entnahme der Schusswaffe verhindern. Durch Verwendung entsprechender Mittel (z.B. Zugriffkodes, Schlüssel, personenbezogene/biometrische Daten) kann die Wirkverbindung(en) zur Schusswaffensicherung beendet und die Schusswaffe entnommen werden.

Ein weiterer Nachteil bekannter Ansätze zur Aufbewahrung von Schusswaffen besteht darin, dass Information, z. B. darüber wer wann eine bzw. welche Schusswaffe entnommen hat und/oder dies erfolglos, weil unberechtigt, versucht hat, nicht erfasst/bereitgestellt werden.

Im übrigen wird zum Stand der Technik auf folgende Druckschriften verwiesen: DE 102 40 119, DE 102 31 685, US 6,912,807, US 5,188,328, US 5,913,557, US 5,503,276, US 4,570,890, US 1,579,552, US 945,520 und GB 2082293. Das Dokument AT 7955 U1 bildet die Gründlage für den Oberbegriff der Ansprüche 1 und 9.

### Aufgabe der Erfindung

Aufgabe der vorliegenden Erfindung ist es, zu ermöglichen, eine Schusswaffe so vor unberechtigter Entnahme geschützt aufzubewahren, dass sie von berechtigten Personen auf einfache Weise von ihrem Aufbewahrungsort entnommen werden kann und dass optional eine von ihrem Aufbewahrungsort unbefugt (z.B. gewaltsam) entnommene Schusswaffe nicht ohne weiteres betriebsbereit ist.

### Zusammenfassung der Erfindung

Zur Lösung der obigen Aufgabe stellt die vorliegende Erfindung eine Vorrichtung zur Aufbewahrung einer Schusswaffe bereit, wobei die Vorrichtung eine Basis, eine Sicherungseinheit zur gesicherten Aufbewahrung der Schusswaffe an der Basis, und eine Steuerung umfasst, wobei die Sicherungseinheit wenigstens teilweise in einen Lauf und/oder ein Patronenlager der Schusswaffe einbringbar ist und einen ersten Sicherungsabschnitt umfasst, der in einen Sicherungszustand, in dem die Sicherungseinheit in der Schusswaffe gesichert ist, und in einen Freigabezustand, in dem die Sicherungseinheit von der Schusswaffe trennbar ist, bringbar ist, und die Steuerung bei Berechtigung eines Benutzers, die Schusswaffe und die Sicherungseinheit zu trennen, den ersten Sicherungsabschnitt in seinen Freigabezustand bringt.

Die erfindungsgemäße Vorrichtung dient zur Aufbewahrung einer oder mehrerer Schusswaffen. Die erfindungsgemäße Vorrichtung weist eine Basis, für jede Schusswaffe eine Sicherungseinheit jeweils zur gesicherten Aufbewahrung einer Schusswaffe an der Basis und eine Steuerung auf.

Im Folgenden wird davon ausgegangen, dass die erfindungsgemäße Vorrichtung eine einzige Sicherungseinheit aufweist, also zur Aufbewahrung einer einzigen Schusswaffe ausgelegt ist. Ausführungen bezüglich der Sicherungseinheit gelten entsprechend für jede weitere Sicherungseinheit.

Die Sicherungseinheit ist wenigstens teilweise, vorzugsweise vollständig, in einen Lauf und/oder ein Patronenlager der Schusswaffe einbringbar und umfasst einen ersten Sicherungsabschnitt. Der erste Sicherungsabschnitt weist einen Sicherungszustand und einen Freigabezustand auf und ist wahlweise in einen dieser Zustände bringbar. In dem Sicherungszustand ist der erste Sicherungsabschnitt in der Schusswaffe gesichert, so dass die Sicherungseinheit nicht unberechtigt von der Schusswaffe getrennt und die Schusswaffe nicht unberechtigt entnommen werden kann. In dem Freigabezustand wird eine Entnahme der Schusswaffe ermöglicht, wobei hierfür die Sicherungseinheit von der Schusswaffe trennbar/entfernbar ist.

Liegt eine beispielsweise von der Steuerung und/oder einer anderen Vorrichtung erkannte Berechtigung eines Benutzers zur Entnahme der Schusswaffe vor, bringt die Steuerung den ersten Sicherungsabschnitt in seinen Freigabezustand. Hierfür kann die Steuerung ausgelegt sein, die Sicherungseinheit bzw. den ersten Sicherungsabschnitt unmittelbar so zu steuern, dass der Freigabezustand eingenommen wird.

Alternativ kann die Steuerung mittelbar den Freigabezustand des ersten Sicherungsabschnitts bewirken, indem die Steuerung beispielsweise eine zwischen der Steuerung und der Sicherungseinheit bzw. dem ersten Sicherungsabschnitt angeordnete Steuereinheit entsprechend steuert. Ferner können hierfür ein oder mehrere Stellglieder entsprechend gesteuert werden, die beispielsweise elektromechanisch oder mechanisch ausgeführt sind.

Die Steuerung kann als baueinheitlich integrierte, einzelne Komponente geführt sein, die zur Steuerung der gesamten erfindungsgemäßen Vorrichtung dient. Die Steuerung kann auch zwei oder mehrere Steuereinheiten umfassen, die z.B. der Basis und der Sicherungseinheit bzw. jeweils einer oder mehreren Sicherungseinheiten zugeordnet sein können.

Um festzustellen, ob eine Berechtigung eines Benutzers zur Entnahme der Schusswaffe vorliegt, ist eine vorzugsweise elektronische Authentifizierung vorgesehen. Die Authentifizierung kann durch die Steuerung oder durch eine der Steuerung zugeordnete Berechtigungsüberprüfungseinheit durchgeführt werden. Die Berechtigungsüberprüfungseinheit kann beispielsweise einen Speicher, insbesondere einen nicht flüchtigen Speicher (z.B. ROM), umfassen, in dem Daten und/oder Informationen gespeichert sind, die eine oder mehrere Berechtigungen zur Entnahme der Schusswaffe angeben. Solche Daten und/oder Informationen umfassen Kodes, Passworte und/oder biometrische Daten.

Zur Authentifizierung eines Benutzers, der die Schusswaffe nehmen möchte, stellt der Benutzer seine Daten und/oder Informationen (z. B. wenigstens ein Kode, Passwort und/oder biometrische Daten) der Steuerung bzw. der Berechtigungsüberprüfungseinheit bereit. Ergibt ein Vergleich der eingegebenen Daten und/oder Informationen und der gespeicherten Daten und/oder Informationen, dass der Benutzer zur Entnahme der Schusswaffe tatsächlich berechtigt ist, wird der erste Sicherungsabschnitt in den Freigabezustand gebracht.

Eine Berechtigung kann angeben, dass ein Benutzer die Schusswaffe von der Sicherungseinheit und/oder der Basis entfernen darf. Eine Berechtigung kann auch angeben, dass ein Benutzer die Schusswaffe betreiben darf. Unter "Betrieb" der Schusswaffe ist insbesondere zu verstehen, dass die Schusswaffe mit geeigneter Munition geladen und/oder abgefeuert werden kann. Hierfür wird dem Benutzer ebenfalls ermöglicht, die Schusswaffe und die Sicherungseinheit voneinander zu trennen.

Bei einer Ausführungsform ist die Sicherungseinheit fest mit der Basis verbunden. Dies kann z.B. über eine starre, beispielsweise stabförmige Verbindung erreicht werden.

Bei einer weiteren bevorzugten Ausführungsform ist die Sicherungseinheit lösbar an der Basis befestigbar.

Vorzugsweise ist der erste Sicherungsabschnitt und insbesondere die gesamte Sicherungseinheit insgesamt vollständig in den Lauf und/oder das Patronenlager der Schusswaffe einbringbar.

Vorzugsweise kann der erste Sicherungsabschnitt - um seinen Sicherungszustand einzunehmen - in dem Lauf und/oder Patronenlager der Schusswaffe verriegelt, vorzugsweise verspannt, werden und - um seinen Freigabezustand einzunehmen - in dem Lauf und/oder Patronenlager der Schusswaffe entriegelt, vorzugsweise entspannt, werden.

Die Sicherungseinheit kann ferner einen zweiten Sicherungsabschnitt umfassen, der in einen Sicherungszustand bringbar ist, in dem der zweite Sicherungsabschnitt an der Basis gesichert ist; und in einen Freigabezustand bringbar ist, in dem die Sicherungseinheit von der Basis gelöst werden kann.

Bei einer Ausführungsform kann die Basis einen mit der Basis fest verbundenen Träger auf weisen, an dem der zweite Sicherungsabschnitt in seinem Sicherungszustand sicherbar und in seinem Freigabezustand von diesem trennbar ist.

Dabei kann der Träger in den zweiten Sicherungsabschnitt einführbar sein, wobei es vorgesehen ist, dass der zweite Sicherungsabschnitt an dem Träger verriegelbar, vorzugsweise diesen kraftschlüssig umschließend, ist, um seinen Sicherungszustand einzunehmen, und von dem Träger entriegelbar, vorzugsweise durch Beendigung des Kraftschlusses, ist, um seinen Freigabezustand einzunehmen.

Es ist ferner möglich, dass der zweite Sicherungsabschnitt in den Träger einbringbar ist, wobei es dann vorgesehen ist, dass der zweite Sicherungsabschnitt in dem Träger verriegelbar, vorzugsweise verspannbar, ist, um seinen Sicherungszustand einzunehmen, und in dem Träger entriegelbar, vorzugsweise entspannbar, ist, um seinen Freigabezustand einzunehmen.

Der zweite Sicherungsabschnitt kann (ebenfalls) vollständig in den Lauf und/oder das Patronenlager der Schusswaffe einbringbar sein.

Der zweite Sicherungsabschnitt kann den ersten Sicherungsabschnitt wenigstens teilweise umgeben und/oder mit diesem in Reihe verbunden sein.

Es ist vorgesehen, dass die Steuerung so ausgelegt ist, bei einer Berechtigung eines Benutzers den ersten Sicherungsabschnitt in seinen Freigabezustand zu bringen, wobei der zweite Sicherungsabschnitt jedoch in seinem Sicherungszustand zu belassen, oder den zweiten Sicherungsabschnitt in seinen Freigabezustand zu bringen, wobei der erste Sicherungsabschnitt in seinem Sicherungszustand bleibt.

Bei zwei Sicherungsabschnitten kann die Steuerung ausgelegt sein, den ersten Sicherungsabschnitt erst dann in seinen Freigabezustand zu bringen, wenn ein Benutzer zur Entnahme und/oder zum Betrieb der Schusswaffe berechtigt ist.

Vorzugsweise werden zur Entnahme der Schusswaffe und zum Betrieb der Schusswaffe unterschiedliche Berechtigungen verwendet, deren Gültigkeit auch davon abhängen kann, in welcher Reihenfolge und/oder in welchem zeitlichen Abstand zueinander sie bereitgestellt werden. So ist es beispielsweise möglich, dass eine Berechtigung zum Betrieb der Schusswaffe nur gültig ist, wenn zuvor eine gültige Berechtigung zur Entnahme der Schusswaffe vorliegt oder vorlag und der zeitliche Abstand, in dem die Berechtigungen vorliegen/bereitgestellt werden vorbestimmte Grenzwerte nicht überschreitet und/oder unterschreitet. Ferner können Berechtigung nur für vorbestimmte Zeitintervalle oder -abschnitte (z.B. für bestimmte Tage, Tageszeiten, Wochen,...) und/oder zeitlich begrenzt (z.B. ab und/oder bis zu einem vorbestimmten Datum und/oder Tageszeit) sein.

Die Steuerung, die vorzugsweise wenigstens teilweise elektronisch ausgeführt ist, kann der Basis zugeordnet sein, indem die Steuerung beispielsweise an der Basis angeordnet oder in diese baueinheitlich integriert ist.

Alternativ kann die Steuerung so in einem Abschnitt der Sicherungseinheit angeordnet sein, dass auch die Steuerung vollständig in den Lauf und/oder das Patronenlager der Schusswaffe einbringbar ist. Dies kann beispielsweise dadurch erreicht werden, dass die Steuerung in einem Abschnitt der Sicherungseinheit angeordnet ist, der dem ersten Sicherungsabschnitt benachbart ist.

Eine Überprüfung einer Berechtigung eines Benutzers kann, wie eingangs ausgeführt, von der Steuerung oder einer damit verbindbaren oder verbundenen Berechtigungsüberprüfungseinheit durchgeführt werden.

Vorzugsweise ist eine Eingabeeinheit vorgesehen, um Daten und/oder Informationen einzugeben, die eine Berechtigung eines Benutzers zur Entnahme und/oder zum Betrieb der Schusswaffe angeben. Die Eingabeeinheit kann wenigstens eine der folgenden Komponenten umfassen:
- einen Knopf, Schalter, Schieber oder dergleichen, der von einer zur Entnahme berechtigten Person betätigt werden kann und/oder für diese erreichbar ist, wobei durch eine Betätigung angegeben werden kann, dass der Sicherungsabschnitt in seinen Freigabezustand gebracht werden soll
- eine Schnittstelle zur Eingabe eines Kodes, Passworts und dergleichen (z.B. alphanumerische Tastatur, Tastenfeld mit Zahlen, Mikrofon zur Eingabe von gesprochenen Steuerbefehlen)
- ein oder mehrere Sensoren zur Erfassung biometrischer Daten (z.B. Sensor zur Erfassung eines Fingerabdrucks, Sensor zur Erfassung eines Augenhintergrunds, Sensor oder Sensoranordnungen zur Erfassung von Merkmalen eines Gesichts eines Benutzers, Sensor/Mikrofon zur Erfassung von Sprachcharakteristika)
- eine Schnittstellen- und/oder Leseanordnung, um Chipkarten, Smart-Cards und dergleichen auszulesen
- eine Einrichtung zum drahtlosen Empfang von eine Entnahmeberechtigung angegebenen Daten und/oder Informationen (z.B. Empfänger für Transpondersignale, RFID-Empfänger für Signale mit z.B. 125 kHz oder 13,56 MHz, Empfänger für Signale mit z.B. 25 kHz oder 868 MHz, Bluetooth-Empfänger etc.)

Die Eingabeeinheit kann, insbesondere wenn die Steuerung in die Basis integriert ist oder in den Lauf und/oder das Patronenlager der Schusswaffe einbringbar ist, von der Steuerung umfasst oder getrennt von der Steuerung ausgeführt sein. Verbindung(en) zwischen der Eingabeeinheit bzw. Komponenten derselben und der Steuerung können entsprechende Datenschnittstellen umfassen.

Die Steuerung kann ausgelegt sein, Daten und/oder Informationen zu erfassen, die den Betrieb oder Betriebszustände der erfindungsgemäßen Vorrichtung angeben. Solche Daten und/oder Informationen umfassen Angaben darüber, ob, wann, wie oft der erste und/oder der zweite Sicherungsabschnitt in den Sicherungszustand und/oder den Freigabezustand gebracht worden ist, wie lange die Zustände beibehalten worden sind, ob, wann, wie oft versucht wurde, die Sicherungseinheit unberechtigt zu entfernen, welche berechtigten Benutzer wie oft die erfindungsgemäßen Vorrichtung verwendet haben und dergleichen. Solche Angaben können beispielsweise in sogenannten log-files gespeichert und/oder bereitgestellt werden. Eine derartige Speicherung kann von der Steuerung und gegebenenfalls unter Verwendung geeigneter Speicherkomponenten durchgeführt werden. Solche protokollierten Daten und/oder Informationen können Benutzern und/oder Daten/Informationen verarbeitenden Geräten, z.B. zur Auswertung, bereitgestellt werden.

Ferner kann eine Ausgabeeinheit vorhanden sein, um Daten und/oder Informationen an einen Benutzer auszugeben. Die Ausgabeeinheit kann beispielsweise verwendet werden, um dem Benutzer Angaben über den Betriebszustand der erfindungsgemäßen Vorrichtung bereitzustellen, beispielsweise ob die Schusswaffe an der Basis gesichert ist oder nicht, und/oder von der Steuerung erfasste, protokollierte Daten und/oder Informationen (z. B. log-files) bereitzustellen. Die Ausgabeeinheit kann auch verwendet werden, um Daten und/oder Informationen von dem Benutzer anzufordern, die bei korrekter Eingabe eine Berechtigung des Benutzers zur Entnahme der Schusswaffe angeben. Die Daten- und/oder Informationsausgabe kann akustisch, optisch und/oder elektrisch bzw. elektronisch erfolgen. Die Ausgabeeinheit kann getrennt von der Steuerung ausgeführt oder von dieser umfasst sein.

Vorzugsweise ist der wenigstens eine Sicherungsabschnitt, d.h. der erste Sicherungsabschnitt und/oder, falls vorgesehen, der zweite Sicherungsabschnitt, so ausgeführt, dass im Sicherungszustand in der Schusswaffe sichernde Kräfte erzeugt werden können, die auf benachbarte Kontaktflächen, die je nach Ausführungsform Innenflächen des Lauf/oder des Patronenlagers und/oder Außen- oder Innenflächen eines Trägers an der Basis sein können, wirken. Ferner kann der wenigstens eine Sicherungsabschnitt so ausgeführt sein, dass solche Kräfte dann erhöht werden, wenn ein unberechtigter/unbefugter Benutzer versucht, die Sicherungseinheit aus der Schusswaffe zu entfernen. Insbesondere ist es vorgesehen, dass auf diese Weise Kräfte soweit erhöht werden können, dass Beschädigungen der Schusswaffe, insbesondere von Innenflächen des Laufs und/oder des Patronenlagers, verursacht werden, die die Schusswaffe unbrauchbar machen können.

Ferner ist es möglich, dass die Steuerung eine Steuereinheit, die vorzugsweise wenigstens teilweise elektronisch ausgeführt ist, aufweist.

Des Weiteren ist es möglich, die Steuereinheit in einem Abschnitt der Sicherungseinheit anzuordnen, der vollständig in den Lauf und/oder das Patronenlager der Schusswaffe eingebracht werden kann.

Ferner stellt die vorliegende Erfindung eine Sicherungseinheit bereit, die zur gesicherten Aufbewahrung einer Schusswaffe an einem an einer Basis befestigten Träger verwendet werden kann. Die Sicherungseinheit umfasst einen ersten Sicherungsabschnitt, der in einen Lauf und/oder ein Patronenlager der Schusswaffe einbringbar ist, und in einen Sicherungszustand zur Sicherung in der Schusswaffe und in einen Freigabezustand zur Freigabe von der Schusswaffe bringbar ist, und einen zweiten Sicherungsabschnitt, der in einen Sicherungszustand zur Sicherung an der Basis und in einen Freigabezustand zur Freigabe von der Basis bringbar ist.

Der erste Sicherungsabschnitt kann vollständig in den Lauf und/oder das Patronenlager der Schusswaffe einbringbar sein.

Der erste Sicherungsabschnitt kann in dem Lauf und/oder Patronenlager der Schusswaffe verriegelbar, vorzugsweise verspannbar, sein, um seinen Sicherungszustand einzunehmen, und in dem Lauf und/oder Patronenlager der Schusswaffe entriegelbar, vorzugsweise entspannbar, sein, um seinen Freigabezustand einzunehmen.

Der erste Sicherungsabschnitt und der zweite Sicherungsabschnitt können in Reihe miteinander verbunden sein.

Der ersten Sicherungsabschnitt kann den zweiten Sicherungsabschnitt wenigstens teilweise umgeben.

Der zweite Sicherungsabschnitt kann wenigstens teilweise in den Lauf und/oder das Patronenlager der Schusswaffe einbringbar sein.

Der zweite Sicherungsabschnitt kann eine Ausnehmung aufweisen, in die ein mit der Basis verbundenen Träger eingeführt werden kann, und kann an dem Träger verriegelbar, vorzugsweise diesen kraftschlüssig umschließend, sein, um seinen Sicherungszustand einzunehmen, und kann von dem Träger entriegelbar, vorzugsweise durch Beendigung des Kraftschlusses, sein, um seinen Freigabezustand einzunehmen.

Der zweite Sicherungsabschnitt kann in einen mit der Basis verbundenen Träger einbringbar sein und kann in dem Träger verriegelbar, vorzugsweise verspannbar, sein, um seinen Sicherungszustand einzunehmen, und kann in dem Träger entriegelbar, vorzugsweise entspannbar, sein, um seinen Freigabezustand einzunehmen.

Die Sicherungseinheit kann ferner eine Steuereinheit aufweisen, die ausgelegt ist, bei einer Berechtigung eines Benutzers den ersten Sicherungsabschnitt in seinen Freigabezustand zu bringen, wobei der zweite Sicherungsabschnitt in seinem Sicherungszustand bleibt, oder den zweiten Sicherungsabschnitt in seinem Freigabezustand zu bringen, wobei der erste Sicherungsabschnitt in seinem Sicherungszustand bleibt.

Die Steuereinheit kann ausgelegt sein, den ersten Sicherungsabschnitt erst dann in seinen Freigabezustand zu bringen, wenn ein Benutzer zum Betrieb der Schusswaffe berechtigt ist.

Die Steuereinheit kann in einem Abschnitt der Sicherungseinheit angeordnet sein, der vollständig in den Lauf und/oder das Patronenlager der Schusswaffe einbringbar ist.

Die Steuereinheit kann ausgelegt sein, eine Überprüfung einer Berechtigung eines Benutzers durchzuführen.

Die Sicherungseinheit kann ferner eine Einheit aufweisen, die ausgelegt ist, eine Überprüfung einer Berechtigung eines Benutzers durchzuführen.

Die Einheit zur Überprüfung einer Berechtigung eines Benutzers kann in einem Abschnitt der Sicherungseinheit angeordnet sein, der vollständig in den Lauf und/oder das Patronenlager der Schusswaffe einbringbar ist.

Die Sicherungseinheit kann ferner eine Eingabeeinheit aufweisen, mit der Daten und/oder Informationen eingegeben werden können, die eine Berechtigung eines Benutzers angeben.

Die Eingabeeinheit kann in einem Abschnitt der Sicherungseinheit angeordnet sein, der vollständig in den Lauf und/oder das Patronenlager der Schusswaffe einbringbar ist.

Die Sicherungseinheit kann einen Aktor umfassen, der mit dem ersten Sicherungsabschnitt gekoppelt ist, um diesen wahlweise in seinen Sicherungszustand und seinen Freigabezustand zu bringen, und/oder einen Aktor umfassen, der dem zweiten Sicherungsabschnitt zugeordnet ist, um diesen wahlweise in seinen Sicherungszustand und seinen Freigabezustand zu bringen.

Der wenigstens eine Aktor kann von der Steuereinheit steuerbar sein.

Der wenigstens eine Sicherungsabschnitt kann ausgelegt sein, in seinem Sicherungszustand auf benachbarte Kontaktflächen sichernde wirkende Kräfte zu erzeugen und bei Krafteinwirkung zum unberechtigten Entfernen der Sicherungseinheit von der Schusswaffe ohne Berechtigung eines Benutzers solche Kräfte zu erhöhen.

Die Sicherungseinheit kann vollständig in den Lauf und/oder das Patronenlager der Schusswaffe einbringbar sein.

### Kurze Beschreibung der Zeichnungen

In der folgenden Beschreibung wird auf die beigefügten Zeichnungen Bezug genommen. Diese veranschaulichen in
- Fig. 1: schematisch eine Ausführungsform der erfindungsgemäßen Vorrichtung zur Aufbewahrung mehrerer Schusswaffen,
- Fig. 2: eine Ausführungsform der vorliegenden Erfindung mit einer fest mit der Basis verbundenen Sicherungseinheit,
- Fig. 3: eine Ausführungsform der vorliegenden Erfindung mit einer mit der Basis lösbar verbindbaren Sicherungseinheit,
- Fig. 4: eine Ausführungsform einer Sicherungseinheit für die Ausführungsform von Fig. 2,

- Fig. 5 und 6: Ausführungsformen von Sicherungseinheiten für die Ausführungsform von Fig. 3, und
- Fig. 7 bis 12: perspektivische Ansichten einer Ausführungsform der vorliegenden Erfindung zur Sicherung und Aufbewahrung von Waffen, die z.B. auf einem Tisch oder in einer Vitrine angeordnet werden kann,
- Fig. 13 und 14: perspektivische Ansichten einer Ausführungsform der vorliegenden Erfindung zur Sicherung und Aufbewahrung von Waffen in einander gegenüberliegenden, zweireihigen Anordnungen, die z.B. an einer Wand befestigbar ist,
- Fig. 15 bis 17: perspektivische Ansichten einer Ausführungsform der vorliegenden Erfindung zur Sicherung und Aufbewahrung von Waffen in einreihiger Anordnung, die z.B. an einer Wand befestigbar ist,
- Fig. 18 bis 20: perspektivische Ansichten einer Ausführungsform der vorliegenden Erfindung zur Sicherung und Aufbewahrung von Waffen, die z.B. in einem Verkaufsraum verwendbar ist,
- Fig. 21 bis 23: perspektivische Ansichten einer weiteren Ausführungsform der vorliegenden Erfindung zur Sicherung und Aufbewahrung von Waffen, die z.B. in einem Verkaufsraum verwendbar ist, und
- Fig. 24 bis 26: perspektivische Ansichten einer Ausführungsform der vorliegenden Erfindung zur Sicherung und Aufbewahrung von Waffen in zweireihiger gleichgerichteter Anordnung, die z.B. an einer Wand befestigbar ist.

Der Vollständigkeit halber ist darauf hingewiesen, dass nicht alle Bezugszeichen, wenn sie bereits einmal verwendet wurden, in allen Zeichnungen wiederholt werden.

### Beschreibung bevorzugter Ausführungsformen

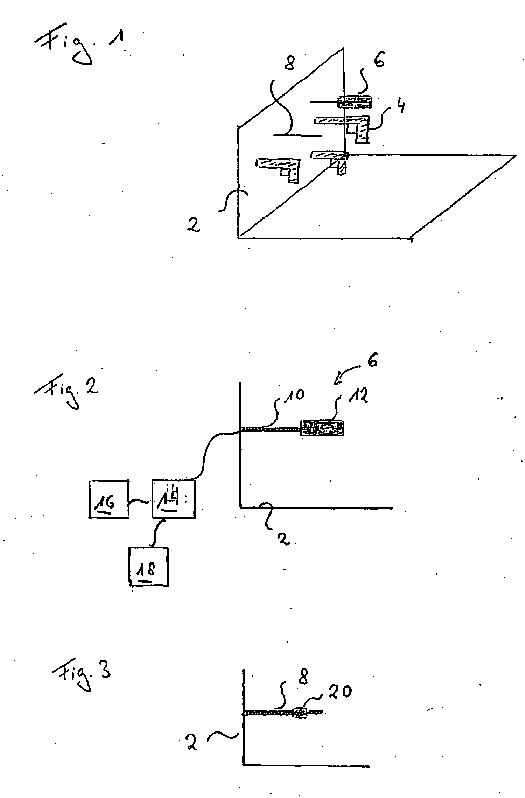

Fig. 1 veranschaulicht schematisch eine Ausführungsform der Vorrichtung zur Aufbewahrung mehrerer Schusswaffen. Die Vorrichtung weist eine Basis 2 auf, an der Schusswaffen 4 angeordnet sind. Die Schusswaffen 4 sind unter Verwendung von Sicherungseinheiten 6 an der Basis 2 gesichert. Die Sicherungseinheiten 6 können mit der Basis 2 fest verbunden sein. Fig. 1 zeigt u.a. eine Sicherungseinheit 6, an der keine Schusswaffe angeordnet ist. Ferner zeigt Fig. 1 einen Träger 8, der an der Basis 2 befestigt ist und zur Verwendung mit einer von der Basis 2 separat ausgeführten Sicherungseinheit (nicht gezeigt) vorgesehen ist. Die Basis 2 kann ausschließlich damit fest verbundene Sicherheitseinheiten, ausschließlich damit fest verbundene Träger oder sowohl damit fest verbundene Sicherungseinheiten als auch damit fest verbundene Träger aufweisen.

Die Basis 2 kann z.B. verwendet werden, um Schusswaffen in Geschäften, auf Messen, bei Präsentationen und dergleichen sichtbar auszustellen.

Bei Weiteren, nicht gezeigten Ausführungsformen kann die Basis in einem Waffenschrank, Waffentresor oder dergleichen integriert sein oder eine baueinheitliche, integrale Komponente einer solchen Aufbewahrungsvorrichtung darstellen. Im letzteren Fall ist es möglich, die Auf bewahrungsvorrichtung als Basis zu betrachten.

Des Weiteren sind Ausführungsformen vorgesehen, bei denen eine Basis im Zugriffsbereich einer zur Schusswaffenbenutzung berechtigten Person angeordnet ist, wie zum Beispiel an der Unterseite eines Tisches, im Handschuhfach eines Autos, in einer Vorrichtung zum Tragen einer Schusswaffe (z.B. Holster) und dergleichen.

Bei im Folgenden beschriebenen Ausführungsformen wird vereinfachend von einer Aufbewahrung einer einzelnen Schusswaffe ausgegangen. Diesbezügliche Ausführungen gelten hinsichtlich der Aufbewahrung von mehr als einer Schusswaffe und hinsichtlich dafür verwendeter Komponenten und Funktionen entsprechend. Ferner wird vereinfachend auf eine Schusswaffe in Form einer Faustfeuerwaffe Bezug genommen. Diesbezügliche Ausführungen gelten entsprechend für Schusswaffen in Form von anderen Waffenarten, insbesondere Langwaffen.

Fig. 2 zeigt eine Ausführungsform, mit einer Basis 2, an der eine Sicherungseinheit 6 fest angeordnet ist. Die Sicherungseinheit 6 ist mittels einer Verbindung 10 an der Basis 2 befestigt und weist einen ersten Sicherungsabschnitt 12 auf. Der Sicherungsabschnitt 12 ist in seiner Dicke so bemessen, dass er in den Lauf oder ein Patronenlager einer Schusswaffe eingeführt werden kann. Ferner ist der erste Sicherungsabschnitt 12 in seiner Länge so bemessen, dass er vollständig in den Lauf bzw. das Patronenlager eingebracht werden kann.

Vorteilhafterweise kann der erste Sicherungsabschnitt 12 möglichst weit in den Lauf oder das Patronenlager eingebracht werden. Um dies für unterschiedlich lange bzw. tiefe Läufe und Patronenlager zu ermöglichen, kann es vorteilhaft sein, die Verbindung 10 so zu bemessen, dass beispielsweise bei kurzen Läufen die Verbindung 10 teilweise sichtbar bzw. erreichbar ist, während bei langen Läufen auch die Verbindung 10 vollständig in den Lauf eingebracht werden kann.

Zur Steuerung der Sicherungseinheit 6 und insbesondere des ersten Sicherungsabschnitts 12 ist eine Steuerung 14, beispielsweise in Form eines Computers oder einer anwendungsspezifisch aufgebauten, rechnerbasierten Vorrichtung, betriebsfähig mit der Sicherungseinheit 6 verbunden. Die in Fig. 2 dargestellte drahtgebundene Datenverbindung kann bei nicht dargestellten Ausführungsformen wenigstens teilweise durch eine drahtlose Verbindungsstrecke realisiert sein. Ferner ist eine Eingabeeinheit 16 vorgesehen, über die Daten und/oder Informationen eingegeben werden können, die angeben, ob die eingebende Person zur Entnahme einer an der Basis 2 angeordneten Schusswaffe berechtigt ist. Über eine Ausgabeeinheit 18 können Benutzern Daten und/oder Informationen über den Betriebszustand der Sicherungseinheit 6 bereitgestellt werden, insbesondere darüber, ob eine an der Basis 2 angeordnete Schusswaffe an dieser gesichert ist oder entfernt werden kann. Alternativ zu der Darstellung von Fig. 2 können die Steuerung 14, die Eingabeeinheit 16 und die Ausgabeeinheit 18 wenigstens teilweise baueinheitlich integriert in einer Einheit zusammengefasst sein. Verbindungen zwischen der Steuerung 14, der Eingabeeinheit 16 und der Ausgabeeinheit 18 können drahtgebunden und/oder drahtlos ausgeführt sein.

Die in Fig. 3 gezeigte Ausführungsform unterscheidet sich von der Ausführungsform von Fig. 2 dadurch, dass an der Basis 2 keine Sicherungseinheit 6, sondern ein Träger 8 fest angeordnet ist. Der Träger 8 kann beispielsweise als sich von der Basis 2 weg erstreckender Stab oder Stange aus Metall ausgebildet sein. Der Träger 8 kann einen kreisförmigen oder einen mehreckigen Querschnitt aufweisen. Ein mehreckiger Querschnitt des Trägers 8 kann vorteilhaft sein, wenn eine Schusswaffe in unterschiedlichen Orientierungen (z.B. Richtung des Griffs einer Faustfeuerwaffe) an der Basis 2 angeordnet werden soll.

Der Träger 8 kann, wie in Fig. 3 veranschaulicht, einen verdickten Abschnitt 20 aufweisen. Der verdickte Abschnitt 20 kann die Verbindung mit einer von der Basis 2 separat ausgeführten Sicherungseinheit (nicht gezeigt) zur Sicherung einer Schusswaffe an der Basis 2 verbessern.

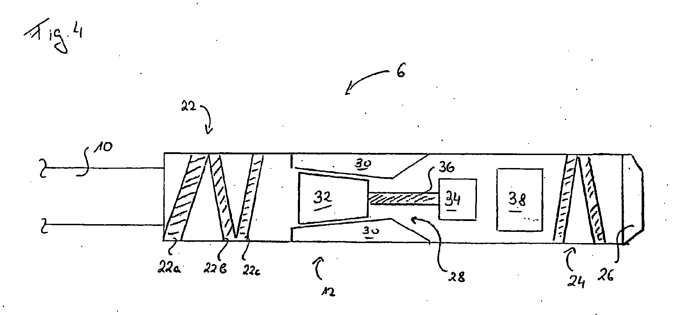

Fig. 4 zeigt eine Ausgestaltung einer Sicherungseinheit 6 für die Ausführungsform von Fig. 2, deren Verbindung 10 zu der Basis 2 nur teilweise dargestellt ist. Wie in Fig. 4 gezeigt, weist die Sicherungseinheit 6 einen Sicherungsabschnitt 12 auf. Der Sicherungsabschnitt 12 ist, wie oben ausgeführt, so bemessen, dass er in einen Lauf einer nicht dargestellten Schusswaffe, insbesondere in einen hinteren Teil des Laufs, eingeführt und dort angeordnet werden kann. Dadurch kann verhindert werden, dass eine an der Basis 2 gesicherte Schusswaffe entfernt werden kann, indem ein Teil des Laufs abgesägt wird. Vorzugsweise kann die Sicherungseinheit 6 und vorteilhafter Weise der Sicherungsabschnitt 12 so weit in den Lauf einer Schusswaffe eingebracht werden, dass die Sicherungseinheit 6 bzw. der Sicherungsabschnitt 12 das Laden von Munition verhindert, Ladeeinrichtungen der Schusswaffe, die Munition in den Lauf laden, blockiert, das Öffnen und Drehen einer Trommel verhindert und dergleichen.

Der Sicherungsabschnitt 12 stellt insbesondere einen Abschnitt dar, der im Lauf einer Schusswaffe formschlüssig und/oder reibschlüssig gesichert werden kann. Hierfür ist es vorgesehen, dass der Sicherungsabschnitt 12 im Lauf verriegelbar bzw. verspannbar ist. Dies stellt einen Sicherungszustand des Sicherungsabschnitts 12 dar. Um den Sicherungsabschnitt 12 aus dem Lauf zu entfernen, werden die formschlüssigen und/oder reibschlüssigen Verbindungen mit dem Laufinneren gelöst, indem beispielsweise der Sicherungsabschnitt 12 entriegelt bzw. entspannt wird. Dieser Zustand stellt einen Freigabezustand des Sicherungsabschnitts 12 dar.

Zwischen dem Sicherungsabschnitt 12 und der Verbindung 10 ist ein Durchschlagsschutz 22 angeordnet. Der Durchschlagsschutz 22 weist wenigstens ein schräg angeordnetes Element 22a, 22b, 22c auf. Das bzw. die Elemente 22a, 22b, 22c sind so ausgeführt, dass, wenn sich der Sicherungsabschnitt 12 in seinem Sicherungszustand befindet, Kräfte, die insbesondere in Längsrichtung der Sicherungseinheit 6 wirken, um die Sicherungseinheit 6 gewaltsam aus dem Lauf der Schusswaffe zu entfernen, bewirken, dass sich die Neigung der schräg gestellten Elemente 22a, 22b, 22c verringert (mit anderen Worten, die schräg gestellten Elementen richten sich aus). Dadurch wird eine Art radialer Expansion verursacht, wodurch wenigstens einzelne der schräg gestellten Elemente 22a, 22b, 22c für eine (weitere) formschlüssige und/oder reibschlüssige Verbindung mit dem Inneren des Laufs sorgen. Dies erhöht die Kräfte, die die Sicherungseinheit 6 in dem Lauf sichern. Vorzugsweise ist der Durchschlagsschutz 22 so ausgeführt, dass Kräfte zum gewaltsamen/unbefugten Entfernen der Sicherungseinheit 6 aus dem Lauf dazu führen können, dass dieser beschädigt werden kann, wenn sich die Elemente 22a, 22b, 22c entsprechend weit genug verlagern.

Ein vergleichbar ausgeführter Durchschlagsschutz 24 kann benachbart zu dem freien Ende der Sicherungseinheit 6 vorgesehen sein.

An dem freien Ende der Sicherungseinheit 6 kann eine Panzerung 26 angeordnet sein. Die Panzerung 26 dient zum Schutz vor Manipulation von der Seite des Patronenlagers her. Die Panzerung 26 kann beispielsweise aus einem Hartmetall, einer Keramik und/oder anderen widerstandsfähigen Materialien hergestellt sein.

Der Sicherungsabschnitt 12 weist eine Klemmeinrichtung 28 auf. Die Klemmeinrichtung 28 umfasst Klemmbacken 30 auf, die mittels einer beispielsweise keil- oder konusförmigen Spanneinrichtung 32 auseinander gedrängt werden können. Wenn sich die Spanneinrichtung 32 in einer Position befindet, in der im wesentlichen keine die Klemmbacken 30 auseinander drängenden Kräfte auf die Klemmbacken 30 ausgeübt werden, befindet sich der Sicherungsabschnitt 12 in seinem Freigabezustand. Wenn die Klemmbacken 30 durch die Spanneinrichtung 32 auseinander gedrängt werden, befindet sich der Sicherungsabschnitt 12 in seinem Sicherungszustand.

Das Maß, in dem die Klemmbacken 30 für einen die Sicherungseinheit 6 im Lauf der Schusswaffe fest sichernden Zustand auseinander gedrängt werden, kann beispielsweise in Abhängigkeit von der Materialbeschaffenheit und/oder Dimensionierung des Laufs festgelegt werden. Dies kann beispielsweise über entsprechende Eingaben an die Steuerung 14 eingestellt werden. Alternativ oder ergänzend ist es vorgesehen, von der Spanneinrichtung 32 erzeugte und/oder auf die Klemmbacken 30 wirkende Kräfte zu erfassen. Erreichen einzelne oder mehrere solcher Kräfte einen Grenzwert, ab dem mit einer Beschädigung des Laufs zu rechnen ist, kann das Maß, in dem die Klemmbacken 30 auseinander gedrängt werden, beschränkt oder in geeigneter Weise (ein wenig) reduziert werden.

Ferner kann die Spanneinrichtung 32 die zur Sicherung erzeugten Kräfte weiter erhöhen, wenn die Sicherungseinheit 6 gewaltsam/unbefugt aus dem Lauf entfernt werden soll, was mittels Kraftsensoren (nicht gezeigt) ermittelt werden kann.

Um die Klemmbacken 30 für den Sicherungszustand des Sicherungsabschnitts 12 auseinander zu drängen, wird die Spanneinrichtung 32 mittels eines Aktors 34 entsprechend bewegt. In Fig. 4 entspricht dies einer Bewegung der Spanneinrichtung 32 nach rechts. Zur Bewegung der Spanneinrichtung 32 kann beispielsweise ein Aktor 34 verwendet werden, der über eine drehbare Spindel 36 mit der Spanneinrichtung 32 zusammenwirkt. Alternativ kann ein Aktor 34 verwendet werden, beispielsweise in Form eines oder mehrerer piezo-elektrischer Elemente, die unmittelbar mit der Spanneinrichtung 32 zusammenwirken und diese bewegen können. Als Aktor 34 können ferner ein oder mehrere Elektromagnete und/oder Elektromotoren und/oder eine oder mehrere Memory-Metalle umfassende Aktoren (z. B. SMA-Draht) verwendet werden. Um den Sicherungsabschnitt 12 in einen Freigabezustand zu bringen, wird die Spanneinrichtung 32 in entgegengesetzter Richtung bewegt, wodurch die Klemmbacken 30 in Richtung ihres ursprünglichen, entspannten Zustands bewegt werden.

Eine Steuereinheit 38 dient zur Steuerung des Aktors 34 und gegebenenfalls zur Erfassung und Auswertung von Kräften, die von dem Sicherungsabschnitt 12 erzeugt werden und/oder auf diesen wirken. Die Steuereinheit 38 wird von der Steuerung 14 gesteuert, um den Sicherungsabschnitt 12 die Steuerung 14 in den Sicherungszustand und den Freigabezustand zu bringen.

Es ist auch vorgesehen, nur die Steuerung 14 oder nur die Steuereinheit 38 zu verwenden, die dann jeweils die Funktionen der anderen Komponente bereitstellen.

Über eine nicht dargestellte Verbindung, die sich über die Verbindung 10 zu der Basis 2 und von dort zu der Steuerung 14 und/oder einer nicht dargestellten Leistungsversorgung erstreckt, können der Steuereinheit 38 und dem Aktor 34 Steuersignale und Energie zugeführt werden.

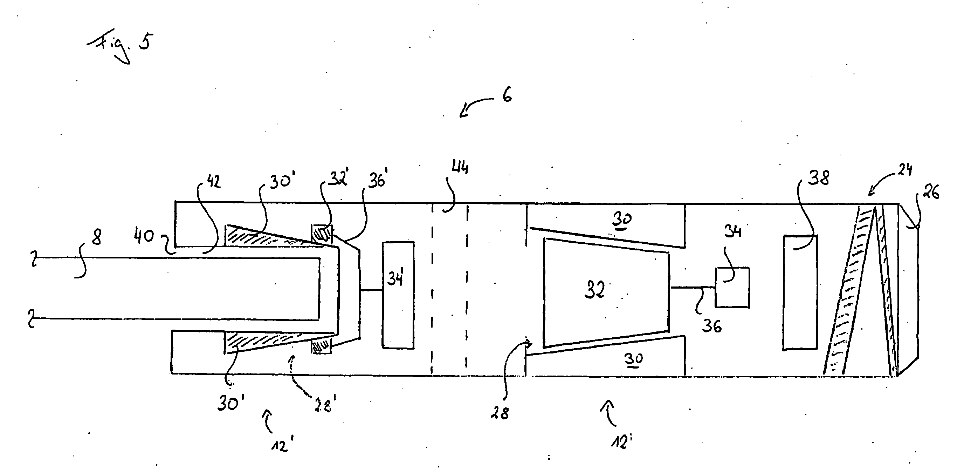

Fig. 5 zeigt eine Ausführungsform einer Sicherungseinheit 6, die zur Verwendung bei der Ausführungsform von Fig. 3 mit einem an der Basis 2 angebrachten Träger 8 vorgesehen ist. Soweit im Folgenden nicht anders ausgeführt, gelten die obigen Ausführungen hinsichtlich der Ausführungsform der Sicherungseinheit 6 von Fig. 4 auch für die Ausführungsform gemäß Fig. 5.

Die Sicherungseinheit 6 gemäß Fig. 5 ist über den Träger 8 mit der Basis 2 verbindbar. Der Träger 8 kann durch eine Öffnung 40 in eine Aufnahme 42 eingebracht werden.

Die Sicherungseinheit 6 von Fig. 5 umfasst einen ersten Sicherungsabschnitt 12 mit einer Klemmeinrichtung 28. Die Klemmeinrichtung 28 umfasst Klemmbacken 30 und eine Spanneinrichtung 32, die mittels eines Aktors 34 bewegt werden kann. Der entsprechende, in Fig. 5 rechts liegende Bereich der Sicherungseinheit 6 ist mit dem in Fig. 4 rechts von dem Durchschlagsschutz 22 gezeigten Bereich vergleichbar. Dieser Bereich und insbesondere der erste Sicherungsabschnitt 12 von Fig. 5 stellt die Funktionen der Ausführungsform von Fig. 4 bereit, die für eine Sicherung in einem Lauf einer Schusswaffe und zur Freigabe dienen.

Ferner ist ein zweiter Sicherungsabschnitt 12', der die Aufnahme 42 umgibt bzw. in dem die Aufnahme 42 ausgebildet ist, ist vorgesehen. Der zweite Sicherungsabschnitt 12' ist ein Abschnitt, der für formschlüssige und/oder reibschlüssige Verbindungen mit der Außenseite des Trägers 8 sorgen kann, um die Sicherungseinheit 6 fest an dem Träger 8 zu sichern. Dabei kann der Sicherungsabschnitt 12' wiederum vollständig, teilweise oder nicht in den Lauf der Schusswaffe einbringbar sein.

An seinem der Öffnung 40 benachbarten Ende kann die Sicherungseinheit 6 - vergleichbar mit dem Durchschlagsschutz 22 von Fig. 4 - einen hier nicht gezeigten Durchschlagsschutz aufweisen. Bei dieser Ausführungsform ist es vorgesehen, einzelne schräg gestellte Elemente des Durchschlagsschutzes ringförmig oder in einer anderen Form auszubilden, die es ermöglicht, die Elemente die Aufnahme 40 umgebend anzuordnen.

Der zweite Sicherungsabschnitt 12' weist eine Klemmeinrichtung 28' mit Klemmbacken 30' auf. Die Klemmbacken 30' können mittels einer Spanneinrichtung 32' in Richtung aufeinander zu gedrängt. Dadurch kann eine Wirkverbindung zwischen den Klemmbacken 30' und dem in der Aufnahme 40 angeordneten Bereich des Trägers 8 hergestellt werden. Wenn sich die Spanneinrichtung 32' in einer Position befindet, in der im Wesentlichen keine Kräfte auf die Klemmbacken 30' ausgeübt werden, die diesen aufeinander zu drängen, befindet sich der zweite Sicherungsabschnitt 12' in seinem Freigabezustand. Wenn die Klemmbacken 30' durch die Spanneinrichtung 32' aufeinander zu gedrängt sind, befindet sich der zweite Sicherungsabschnitt 12' in seinem Sicherungszustand.

Bei dieser Ausführungsform ist es vorgesehen, die Spanneinrichtung 32' ring- oder hohlzylinderförmig auszugestalten. Bei Betätigungen der Spanneinrichtung 32' unter Verwendung eines Aktors 34' ist es vorgesehen, die Spanneinrichtung 32' entlang der Klemmbacken 30' zu verschieben. Ferner ist es möglich, die Klemmbacken 30' wenigstens teilweise mit einem Außengewinde und die Spanneinrichtung 32' mit einem Innengewinde zu versehen. Auf diese Weise kann die Spanneinrichtung 32', vergleichbar zu einer Mutter, auf die Klemmbacken aufgeschraubt und von diesen abgeschraubt werden.

Ansonsten gelten die obigen und folgenden Ausführungen hinsichtlich der Komponenten und Funktionen des ersten Sicherungsabschnitts für den zweiten Sicherungsabschnitt entsprechend.

Die in Fig. 5 gezeigte Steuereinheit 38 ist zur Steuerung der Aktoren 34 und 34' vorgesehen. Es ist auch möglich, eine Steuereinheit für den Aktor 34, die beispielsweise zwischen dem Aktor 34 und dem weiteren Sicherungsabschnitt 12' angeordnet sein kann, und eine weitere Steuereinheit für den Aktor 34' zu verwenden.

Des Weiteren ist es vorgesehen, den in Fig. 5 mit dem Bezugszeichen 44 angegebenen Bereich der Sicherungseinheit 6 als Sollbruchstelle auszuführen. Die Sollbruchstelle 44 kann beispielsweise so ausgelegt sein, dass sie zerstört wird, wenn in diesem Bereich der Sicherungseinheit 6 vorbestimmte Zug- und/oder Torsions- und/oder Scherkräfte wirken und/oder überschritten werden. Versucht beispielsweise eine nicht berechtigte Person, die Sicherungseinheit 6 gewaltsam aus dem Lauf einer Schusswaffe zu entfernen, wird bei entsprechender Krafteinwirkung die Sollbruchstelle 44 zerstört. Dadurch kann zwar der in Fig. 5 links von der Sollbruchstelle 44 liegende Bereich der Sicherungseinheit 6 aus der Schusswaffe entfernt werden, aber der rechts von der Sollbruchstelle 44 liegende Bereich der Sicherungseinheit 6 bleibt mittels des ersten Sicherungsabschnitts 12 in dem Lauf gesichert.

Bei Verwendung der Ausführungsform der Sicherungseinheit 6 in Fig. 5 kann zuerst eine Sicherung im Lauf einer Schusswaffe unter Verwendung des ersten Sicherungsabschnitts 12 und danach eine Fixierung mittels des zweiten Sicherungsabschnitts 12' an dem Träger 8 erfolgen. Alternativ ist es vorgesehen, die Sicherungseinheit 6 zunächst an dem Träger 8 zu sichern und danach im Lauf einer Schusswaffe zu verspannen.

Um eine mit der Sicherungseinheit 6 an dem Träger 8 gesicherte Schusswaffe von der Basis 2 zu entfernen, ist es vorgesehen, den zweiten Sicherungsabschnitt 12' in seinen Freigabezustand zu bringen. Dadurch wird die für eine Sicherung der Schusswaffe sorgende Wirkverbindung mit dem Träger 8 beendet. Die Schusswaffe kann zusammen mit der weiterhin im Lauf gesicherten Sicherungseinheit 6 entfernt werden. Dies erlaubt es, die Schusswaffe zu entnehmen.

Ein Betrieb der Schusswaffe ist aufgrund der im Lauf angeordneten Sicherungseinheit 6 nicht möglich. Um einen Betrieb der Schusswaffe nur berechtigten Personen zu ermöglichen, kann die Sicherungseinheit 6 nur dann aus dem Lauf entfernt werden, wenn Daten und/oder Informationen der Steuereinheit 38 bereitgestellt werden, die eine solche Berechtigung angeben. Solche Daten und/oder Informationen können beispielsweise drahtlos zu der Steuereinheit 38 übertragen werden. Die eingangs hinsichtlich der Steuerung 14 genannten drahtlosen Übertragungsmöglichkeiten können auch hier verwendet werden. Daten und/oder Informationen können zur Steuereinheit 38 auch übertragen werden, indem eine Schnittstelle (nicht gezeigt) verwendet wird, die die Öffnung 40 umgebend und/oder wenigstens teilweise in der Aufnahme 42 bereitgestellt ist. Eine solche Schnittstelle kann beispielsweise eine oder mehrere Kontaktflächen, Kontaktstifte, Kontaktbuchsen, Stecker und dergleichen aufweisen. Wird die Schnittstelle mit einer entsprechend ausgestalteten Schnittstelle eines Geräts, das eine Berechtigung zum Betrieb angebende Daten und/oder Informationen aufweist, können diese zur Steuereinheit 38 übertragen werden. Solche Schnittstellen können auch zur Energieversorgung der Steuereinheit 38 verwendet werden.

Diese Schnittstelle oder eine hinsichtlich der Aufbewahrung an der Sicherungseinheit 6 vergleichbare Schnittstelle kann verwendet werden, um der Steuereinheit 38 und/oder den Aktoren 34 und/oder 34' Steuersignale und Energie zuzuführen, die über den Träger 8 oder darin und/oder daran angeordneten Leitungen übertragen werden.

Bei der Ausführungsform von Fig. 5 und weiteren Ausführungsformen, die von der Basis trennbar sind, kann es vorteilhaft sein, zur Steuerung nur eine in der Sicherungseinheit integrierte Steuereinheit zu verwenden, die Funktionen der oben genannten Steuerung wenigstens teilweise bereitgestellt (z.B. Betriebsprotokollierung, Erzeugung von log-files). Dabei können eine Berechtigung eines Benutzers angebende Daten und/oder Informationen über eine externe, mit der Steuereinheit verbindbare Eingabeeinheit oder Schnittstelle und/oder über eine ebenfalls in die Sicherungseinheit integrierte Eingabeeinrichtung bereitgestellt werden. Insbesondere sind hier zur drahtlosen Übertragung ausgelegte Mittel vorteilhaft. Ferner kann eine in die Sicherungseinheit integrierte Energieversorgung verwendet werden, um die Sicherungseinheit unabhängig betreiben zu können. Von der Steuereinheit erfasste Daten und/oder Informationen über den Betrieb können, vorzugsweise drahtlos, bereitgestellt werden.

Alternativ kann die Schusswaffe von der Basis 2 entfernt werden, indem der erste Sicherungsabschnitt 12 in seinen Freigabezustand gebracht wird. Der zweite Sicherungsabschnitt 12 bleibt dabei an der Basis gesichert. Diese Ausführungsform kann beispielsweise verwendet werden, wenn ein Benutzer zur Entnahme und zum Betrieb der Schusswaffe berechtigt ist. Ferner ist es auf diese Weise möglich, an der Basis 2 Sicherungseinheiten anzuordnen, die für Schusswaffen unterschiedlicher Kaliber ausgelegt sind. Wenn eine Schusswaffe mit einem Lauf, dessen Innendurchmesser für die Dimensionierung des ersten Sicherungsabschnitts 12 zu groß oder zu klein ist, kann die an dem Träger 8 befestigte Sicherungseinheit durch eine Sicherungseinheit ersetzt werden, deren erster Sicherungsabschnitt 12 zur Anordnung in dem Lauf geeignet ist.

Bei einer nicht gezeigten Modifikation der Ausführungsform von Fig. 5 ist der Bereich der Sicherungseinheit 6, der zur Sicherung an einem Träger 8 der Basis 2 dient (im Wesentlichen der Bereich mit dem zweiten Sicherungsabschnitt 12' in Fig. 5), im Wesentlichen gleich wie der Bereich ausgeführt, der zur Sicherung im Lauf und/oder dem Patronenlager einer Schusswaffe dient (im Wesentlichen der Bereich mit dem ersten Sicherungsabschnitt 12 in Fig. 5). Bei einer Ausgestaltung können die beiden Bereiche, insbesondere deren Sicherungsabschnitte, zueinander im Wesentlichen spiegelbildlich ausgebildet sein, also nach Art einer Zwillingsbauweise zusammengesetzt sein.

Diese Ausführungsform ist beispielsweise vorteilhaft, wenn der Träger wenigstens teilweise die Form eines an einem Ende offenen Rohrs hat oder eine andere Ausnehmung ausweist, in die die Sicherungseinheit wenigstens soweit eingebracht werden, dass der entsprechende Sicherungsabschnitt in dem Träger gesichert werden kann. Ansonsten gelten für diese Ausführungsform die Ausführungen unter Bezug auf die Ausführungsform von Fig. 5.

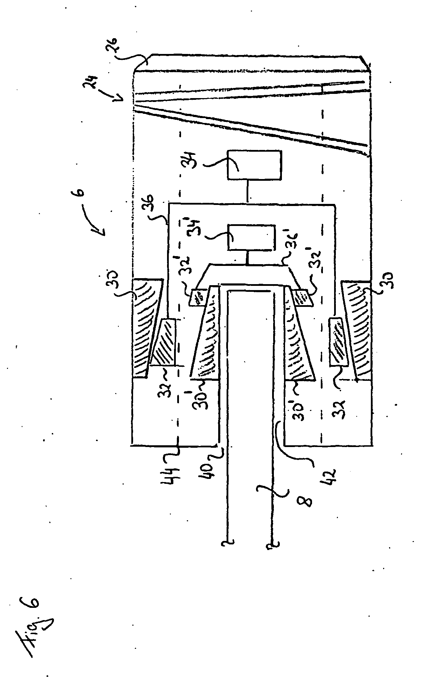

Fig. 6 zeigt eine weitere Ausführungsform einer Sicherungseinheit 6, die zur Verwendung bei der Ausführungsform von Fig. 3 vorgesehen ist. Die Ausführungsform von Fig. 6 unterscheidet sich von der Ausführungsform gemäß Fig. 5 im Wesentlichen dadurch, dass der Bereich der Sicherungseinheit 6, der zur Sicherung an dem Träger 8 dient, von dem Abschnitt der Sicherungseinheit 6 umgeben ist, der zur Sicherung im Lauf einer Schusswaffe dient. Auch hierbei ist die Sollbruchstelle 44 vorgesehen, die zwischen den genannten Abschnitten der Sicherungseinheit 6 angeordnet werden kann.

Bei Weiteren, nicht gezeigten Ausführungsformen kann anstelle eines oben beschriebenen zweiten Sicherungsabschnitts ein wahlweise steuerbar verriegelbarer und entriegelbarer Bajonett-Verschluss oder dergleichen verwendet werden, um die Sicherungseinheit an dem Träger zu sichern.

Ferner sind Sicherungseinheiten möglich, bei denen statt des zweiten Sicherungsabschnitts ein nicht an der Basis sicherbarer Abschnitt, der Basis bzw. einem sich von dieser erstreckenden Träger lösbar verbunden werden kann (z.B. durch Aufstecken). Dies ermöglicht grundsätzliche eine Entnahme der Schusswaffe. Um die Schusswaffe vor unberechtigter Verwendung zu schützen, kann die Sicherungseinheit daten- und/oder informationstechnisch über eine Kabelverbindung (z.B. zur besseren mechanischen Sicherung mit einer Stahlseele versehen) mit der Basis bzw. der Steuerung verbunden sein. Diese Verbindung ermöglicht es, den ersten Sicherungsabschnitt in den Freigabezustand zu bringen, um die Sicherungseinheit von der Schusswaffe trennen zu können. Wird diese Verbindung zerstört, bleibt die Sicherungseinheit in der Schusswaffe gesichert und kann nicht entfernt werden. Hierbei kann zum Beispiel auf eine in der Sicherungseinheit integrierte Steuerungseinheit insbesondere dann verzichtet werden, wenn die Steuerungseinheit es ohne Verbindung zu der Steuerung ermöglichen würde, den ersten Sicherungsabschnitt in den Freigabezustand zu bringen.

Des Weiteren sind Sicherungseinheiten möglich, bei denen ein zweiter Sicherungsabschnitt zur Sicherung an der Basis und statt des ersten Sicherungsabschnitts ein Sicherungsabschnitt verwendet werden, der nur mechanisch in der Schusswaffe gesichert und entsichert werden. Hierbei ist es vorgesehen, dass der zweite Sicherungsabschnitt, dazu dient, die Schusswaffe gesteuert wahlweise an der Basis zu sichern bzw. von dieser freizugeben. Vorzugsweise kann bei solchen Ausführungsformen der mechanisch sicherbare bzw. entsicherbare Sicherungsabschnitt nur von der Schusswaffe getrennt werden, wenn zuvor der zweite Sicherungsabschnitt bei einer entsprechenden Berechtigung eines Benutzers von der Basis wenigstens freigegeben oder freigegeben und entfernt wird. So kann zum Beispiel eine solche Freigabe bzw. Freigabe und Entfernung des zweiten Sicherungsabschnitts Vorbedingung dafür sein, dass zur mechanischen Betätigung bzw. Freigabe des in der Schusswaffe gesicherten Sicherungsabschnitts vorgesehene Bereiche und/oder Komponenten der Sicherungseinheit zugänglich werden.

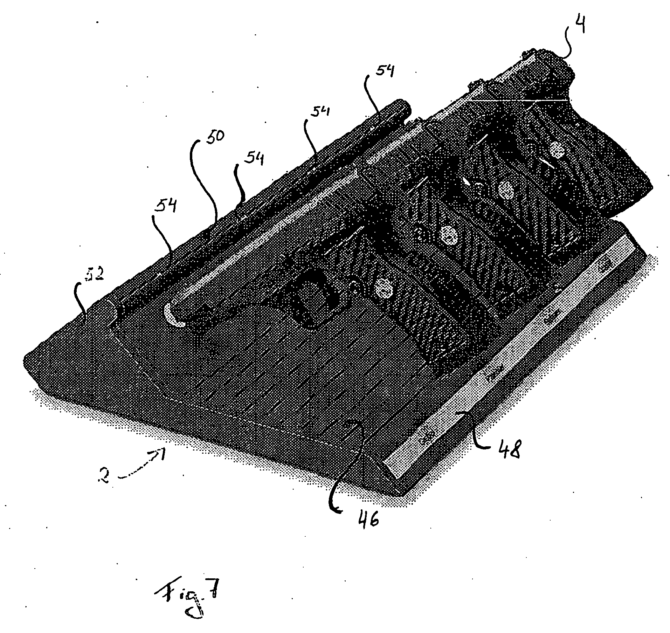

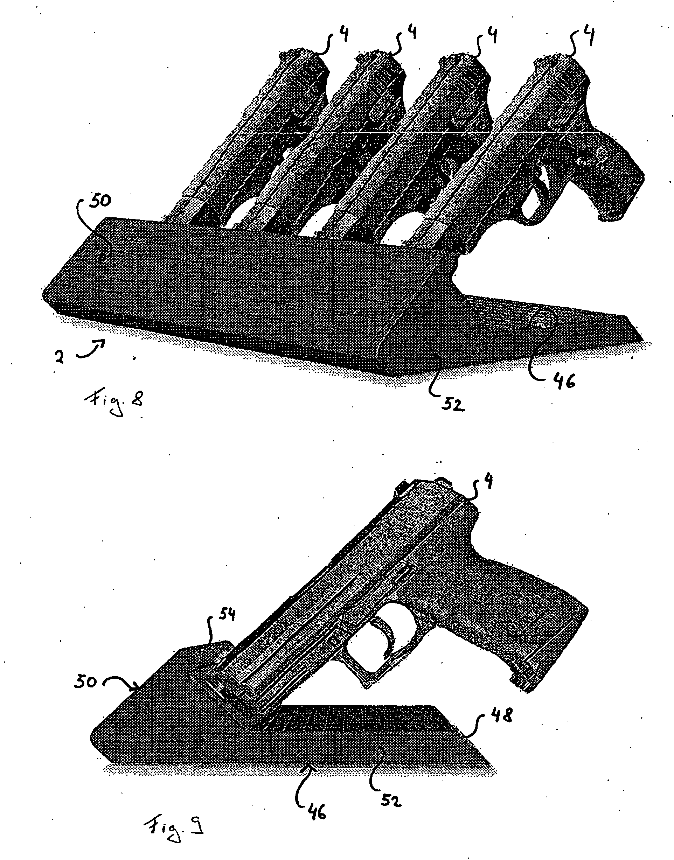

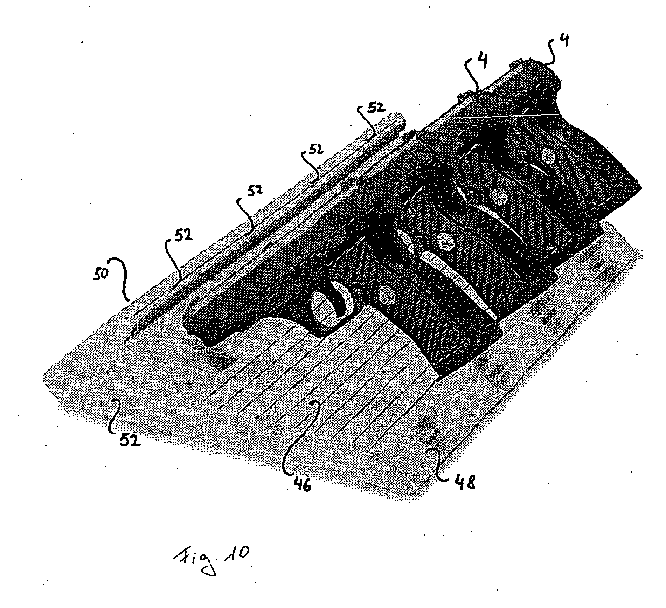

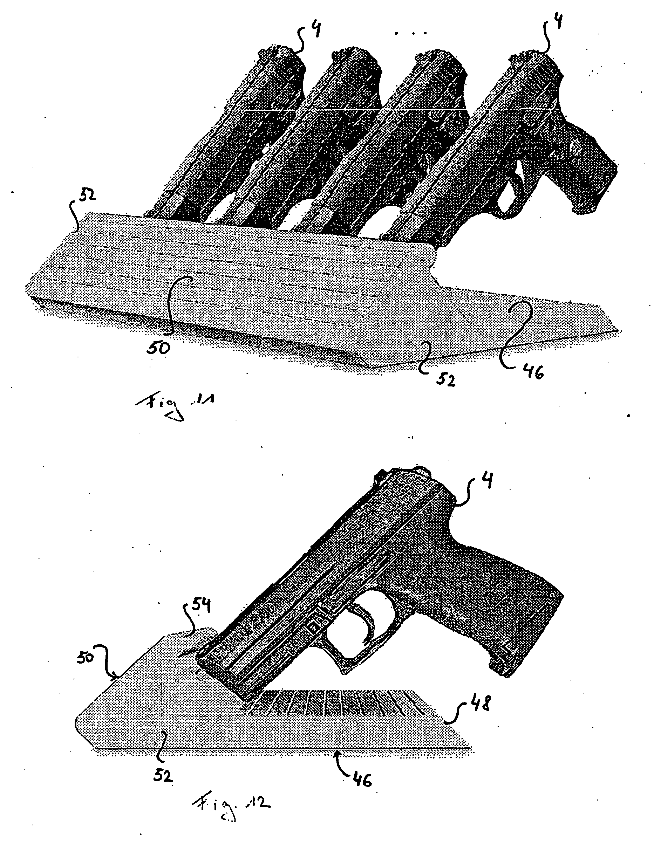

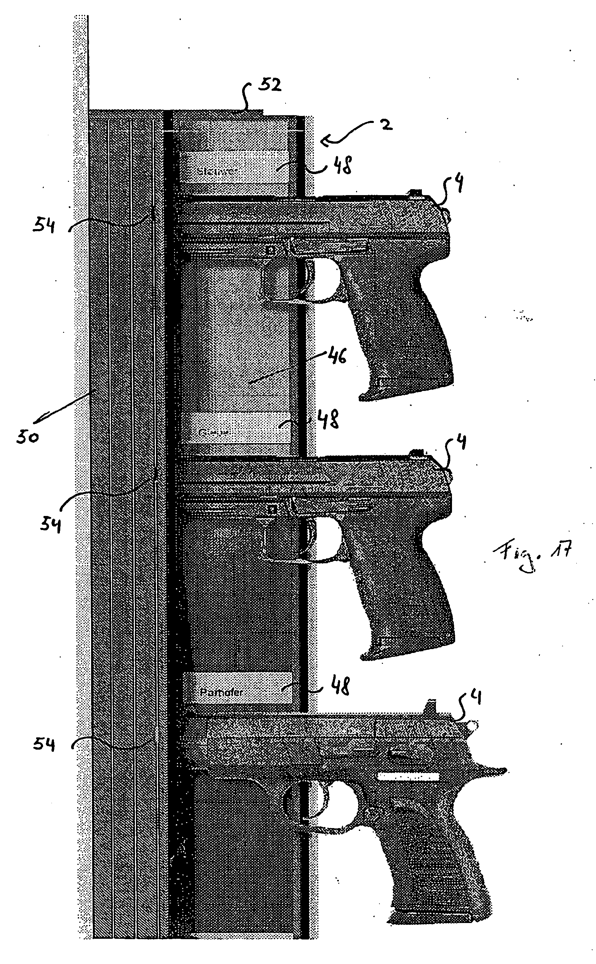

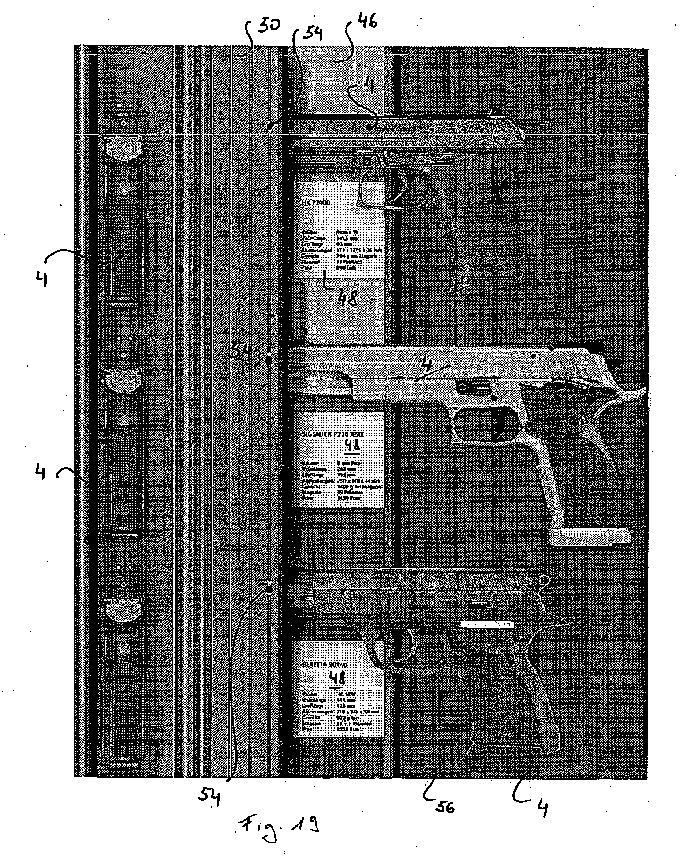

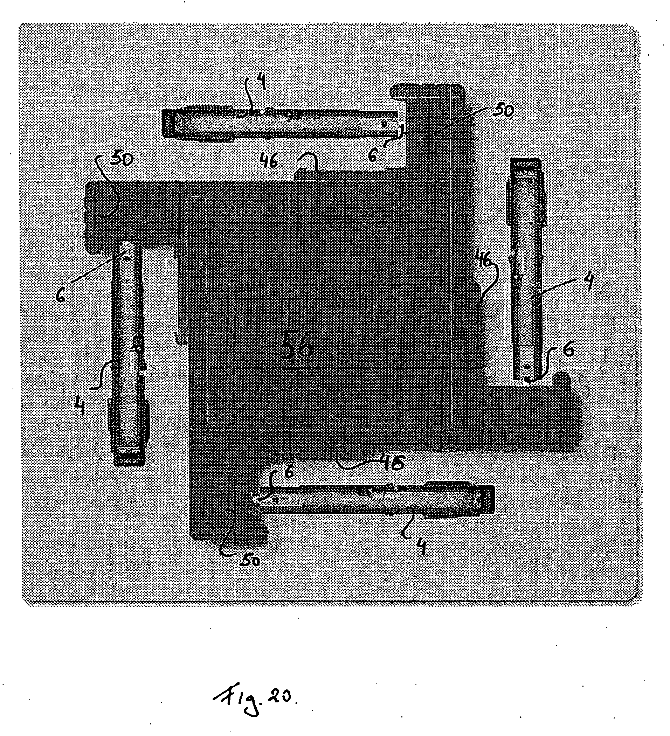

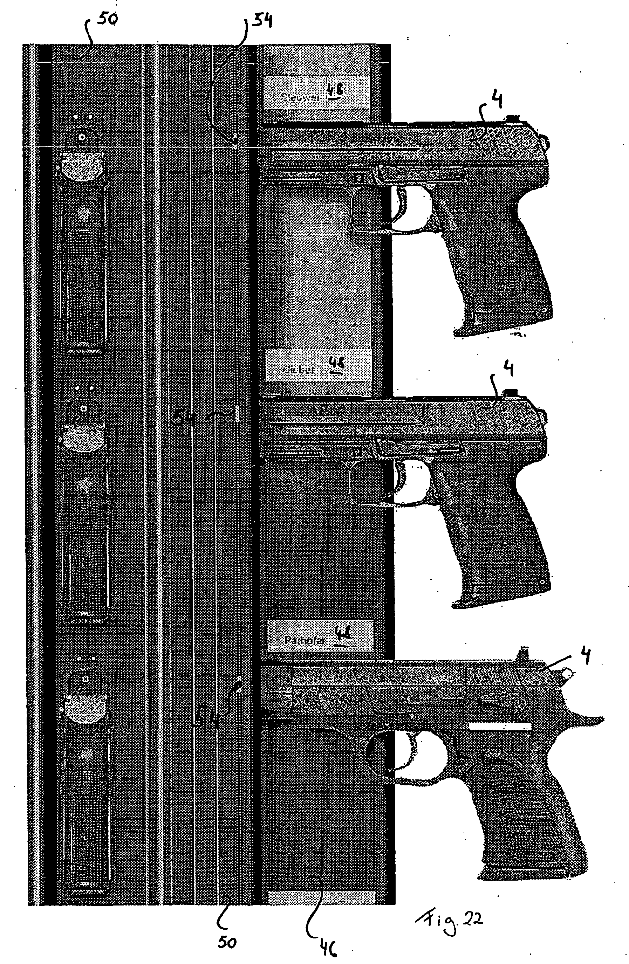

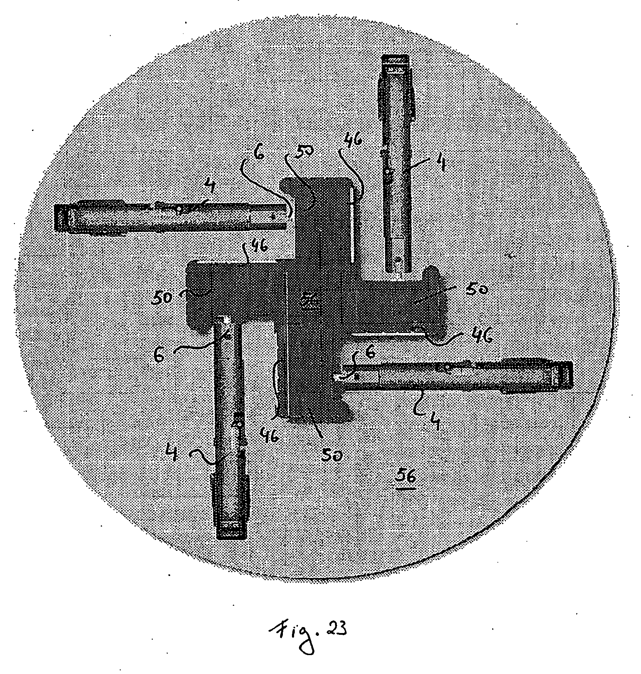

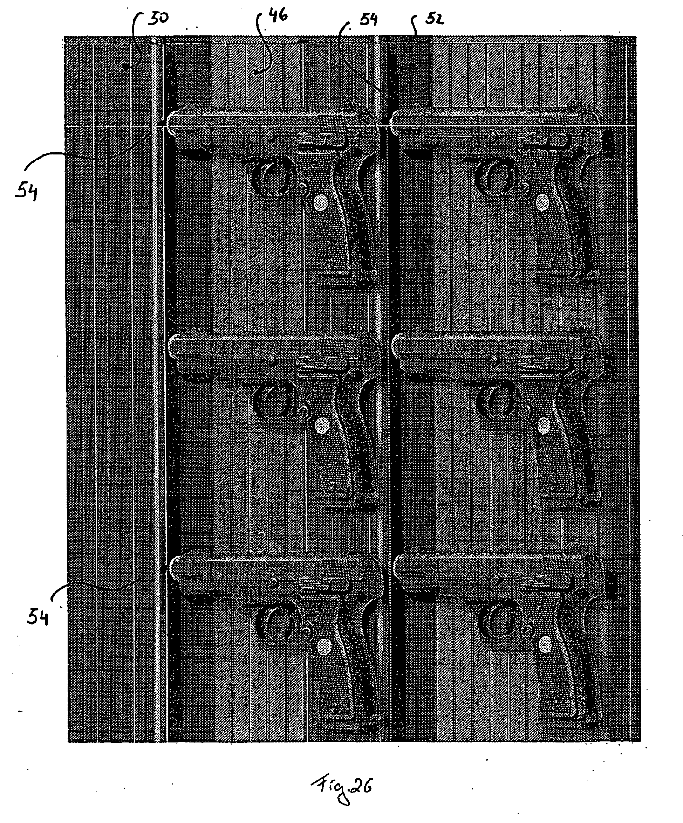

Fig. 7 bis 26 zeigen perspektivische Ansichten von erfindungsgemäßen Vorrichtungen, die im Folgenden detaillierter erläutert sind.

Fig. 7 bis 12 zeigen eine Ausführungsform, die beispielsweise zur Anordnung auf einem Tisch, in einer Vitrine, einem Schrank oder dergleichen verwendet werden kann. Bei dieser Ausführungsform umfasst die Basis eine Grundplatte 46, die beispielsweise an einer Seite einen Bereich 48 aufweist, in dem Angaben über eine darüber jeweils anordbaren Waffe 4 vorgesehen sein können (z.B. Waffentyp, Name des Waffenbesitzers/Benutzers). Die Basis 2 weist ferner einen Hauptkörper 50 auf. Der Hauptkörper 50 kann einstückig mit der Grundplatte 46 ausgeführt oder als davon separate Komponente vorgesehen sein, die mit der Grundplatte 46, beispielsweise durch Kleben, Stecken, Verrasten, Verschweißen, Verschmelzen etc. verbindbar ist.

Bei einer bevorzugten Ausführung ist der Hauptkörper 50 aus einem Strangmaterial herstellbar, das in gewünschte Längen schneidbar ist. Die Verwendung von Strangmaterial ist auch bei einstückiger Ausführung von Grundplatte 46 und Hauptkörper 50 und ebenso für die Grundplatte 46 vorgesehen, wenn diese als separates Bauteil bereitgestellt wird.

Um insbesondere bei Verwendung von Strangmaterial mögliche seitliche Öffnungen abzudecken und/oder zu verschließen, können Seitenteile 52 verwendet werden.

An dem Hauptköper 50 vorzugsweise in Zuordnung zu den Bereichen, wo jeweils eine Schusswaffe 4 angeordnet werden kann, sind Anzeigeelemente 54 vorgesehen. Die Anzeigeelemente 54 können beispielsweise optische Signale erzeugen, die angeben, ob eine Waffe 4 von der Basis 2 entfernt werden kann oder nicht. So ist es beispielsweise vorgesehen, dass die Anzeigeelemente 54, wenn eine Waffe 4 an der Basis 2 gesichert ist, ein rotes Licht emittieren und, wenn eine Waffe 4 von der Basis 2 entfernt werden kann, ein grünes Licht emittieren. Die Anzeigeelemente 54 können beispielsweise LEDs umfassen.

Abweichend von der in Fig. 7 bis 12 gezeigten Ausführungsform kann es vorgesehen sein, mehr als die vier dargestellten Schusswaffen oder weniger Schusswaffen anzuordnen. Dies kann durch entsprechende Dimensionierung der Basis 2 und/oder einer entsprechenden Anzahl von Sicherungseinheiten 6 (hier nicht gezeigt) erreicht werden. Bei der gezeigten Ausführungsform sind beispielsweise entsprechend der vorgesehenen Anzahl von Schusswaffen vier Sicherungseinheiten 6 vorgesehen. Bei einer Ausführung für eine Waffe kann eine einzelne Sicherungseinheit 6 verwendet werden.

Zum Aufbau der in Fig. 7 bis 12 gezeigten Ausführungsform kann bzw. können die Sicherungseinheiten und diesen jeweils zugeordnete Steuerungskomponenten als einzelne Module ausgeführt sein. Ein solcher modulartiger Aufbau erlaubt es, den Hauptkörper 50 mit einer gewünschten Anzahl an Modulen zu bestücken, die z.B. in im Hauptkörper 50 ausgebildete Aufnahmen eingeführt und dort gesichert werden können. Elektrische Verbindungen von und zu dem bzw. den Modulen kann über einen in dem Hauptkörper 50 angeordneten Bus, Verdrahtungsanordnungen und dergleichen erreicht werden.

Abgesehen von den jeweils erläuterten Unterschieden, gelten die obigen Ausführungen bezüglich Fig. 7 bis 12 auch für die im Folgenden beschriebenen Ausführungsformen.

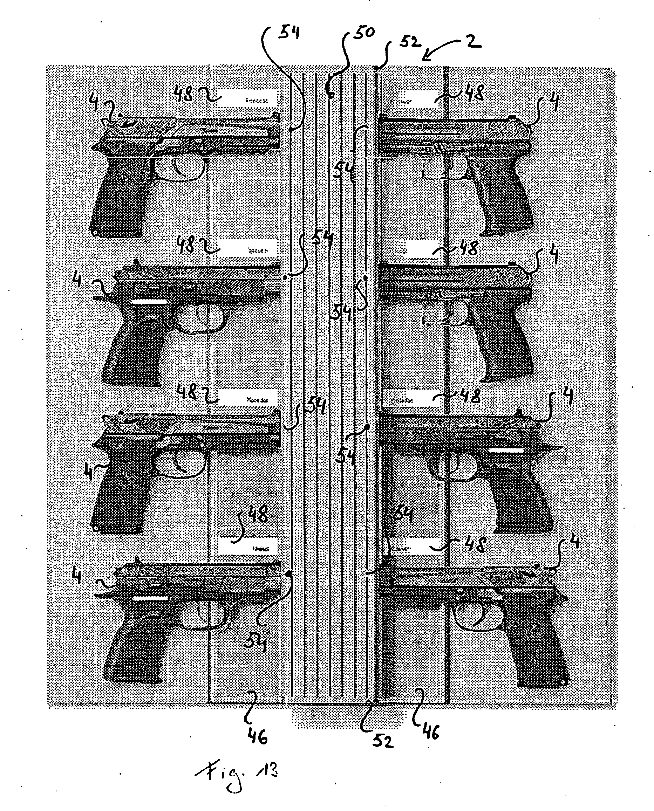

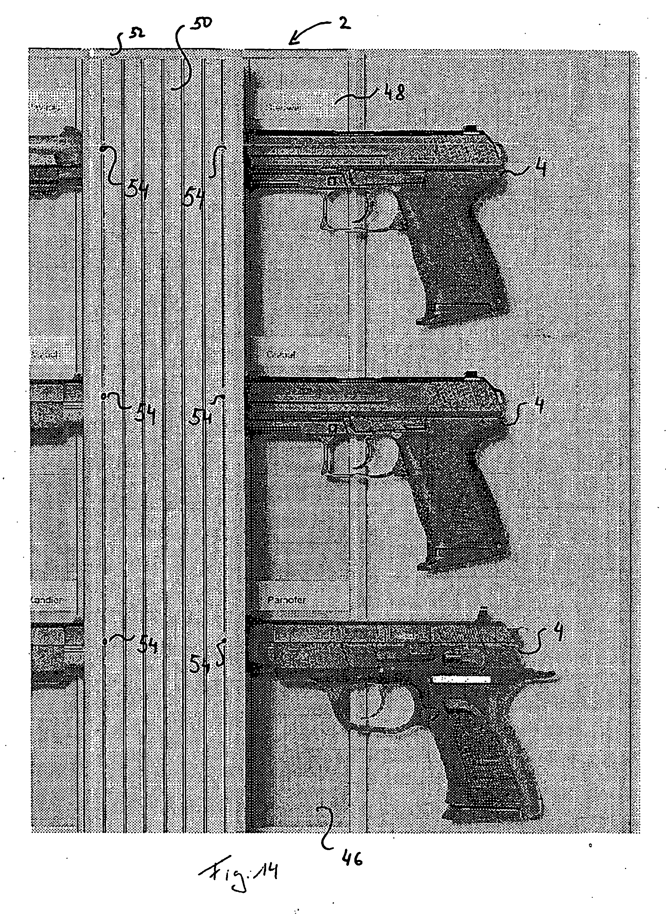

Bei der in Fig. 13 und 14 gezeigten Ausführungsform, die beispielsweise zur Anordnung an einer Wand, einem Paneel und dergleichen verwendet werden kann, ist der Hauptkörper 50 so ausgeführt, dass Waffen 4 in einander gegenüberliegender Anordnung gesichert werden können.

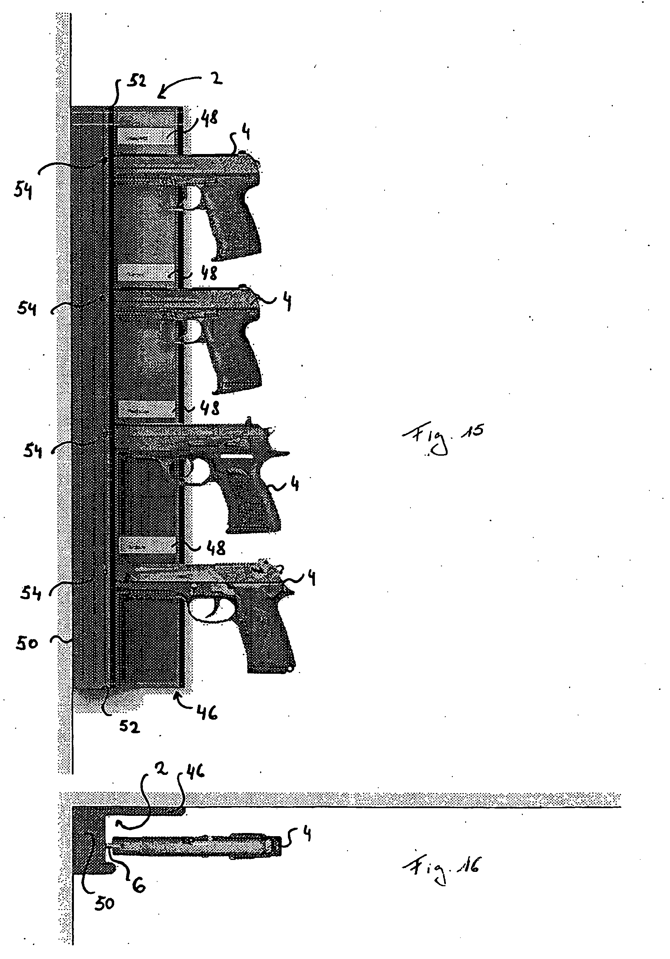

Die in Fig. 15 bis 17 gezeigte Ausführungsform kann ebenfalls zur Anordnung an einer Wand oder einem Paneel verwendet werden und erlaubt die Sicherung von Waffen in einer Reihe übereinander.

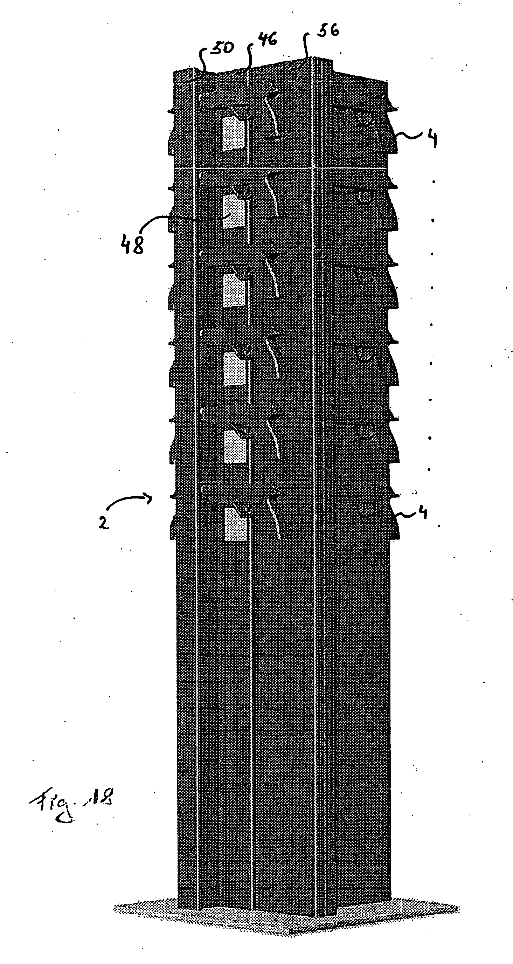

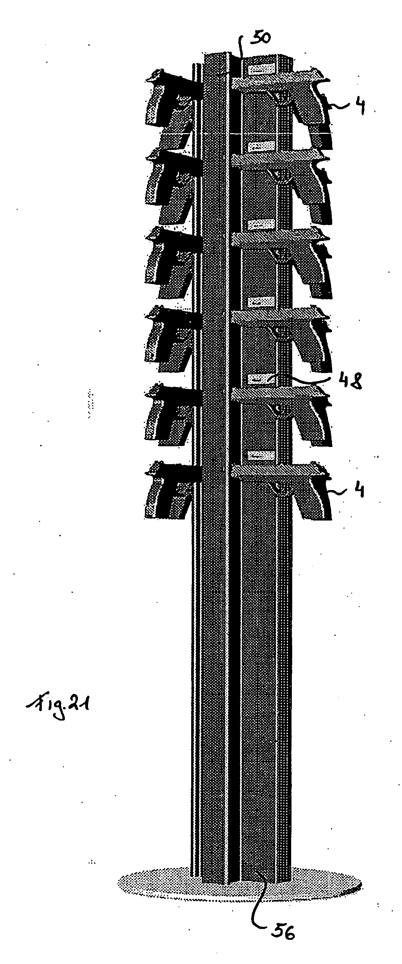

Die in Fig. 18 bis 20 gezeigte Ausführungsform umfasst einen Ständer 56, der baueinheitlich mit der Basis 2 ausgeführt oder als separates Bauteil getrennt von dieser vorgesehen sein kann. Die Ausführungsform von Fig. 21 bis 23 unterscheidet sich durch die Form des Ständers 56.

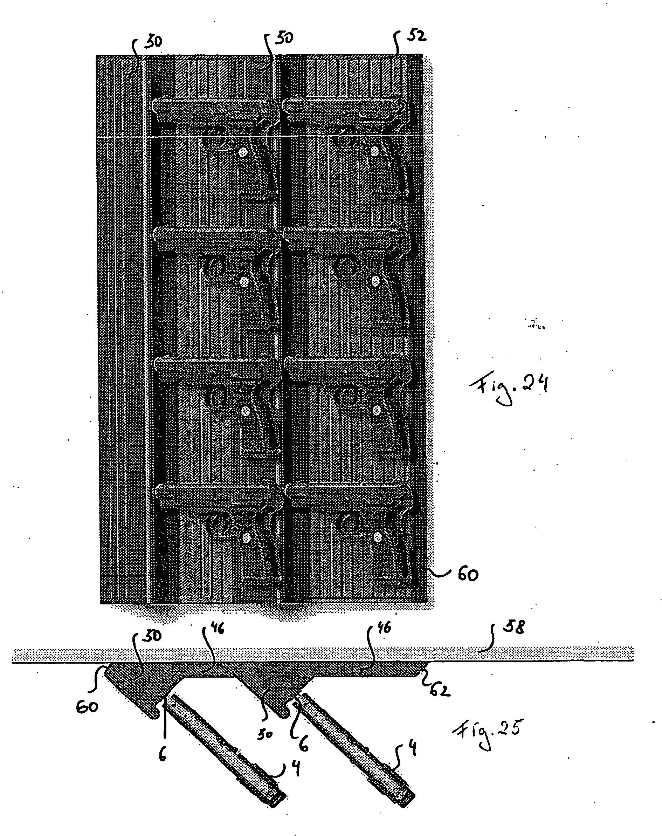

Die in Fig. 24 bis 26 gezeigte Ausführungsform ist abgesehen davon mit der Ausführungsform von Fig. 15 bis 17 vergleichbar, dass die hier gezeigte Variante Schusswaffen unter einem Winkel zu einer zur Befestigung der Basis 2 vorgesehenen Fläche 58 anzuordnen und zu sichern erlaubt. Eine platzsparende Anordnung kann erreicht werden, wenn, wie dargestellt, die Basis 2 abgeschrägte Bereiche 60 und 62 aufweist, die es ermöglichen, mehrere Basen 2 formschlüssig aneinander anzuordnen.

## Patentansprüche

1. Vorrichtung zur Aufbewahrung einer Schusswaffe, mit
- einer Basis (2),
- einer Sicherungseinheit (6) zur gesicherten Aufbewahrung der Schusswaffe an der Basis (2), und
- einer Steuerung (14, 38), wobei
- die Sicherungseinheit (6)
wenigstens teilweise in einen Lauf und/oder ein Patronenlager der Schusswaffe einbringbar ist, **gekennzeichnet durch**
einen ersten Sicherungsabschnitt (12), der in einen Sicherungszustand, in dem die Sicherungseinheit (6) in der Schusswaffe gesichert ist, und in einen Freigabezustand, in dem die Sicherungseinheit (6) von der Schusswaffe trennbar ist, bringbar ist, und
- die Steuerung (14, 38) bei Berechtigung eines Benutzers, die Schusswaffe und die Sicherungseinheit (6) zu trennen, den ersten Sicherungsabschnitt (12) in seinen Freigabezustand bringt.

2. Vorrichtung nach Anspruch 1, bei der
- die Sicherungseinheit (6) fest mit der Basis (2) verbunden ist.

3. Vorrichtung nach Anspruch 1, bei der
die Sicherungseinheit (6) einen zweiten Sicherungsabschnitt (12') umfasst, der ebenfalls in einen Sicherungszustand, in dem die Sicherungseinheit (6) an der Basis (2) gesichert ist, und in einen Freigabezustand bringbar ist, in dem der zweite Sicherungsabschnitt (12') von der Basis (2) gelöst werden kann.

4. Vorrichtung nach Anspruch 3, bei der
- die Basis (2) einen mit ihr fest verbundenen Träger (8) aufweist, und
- der zweite Sicherungsabschnitt (12') in seinem Sicherungszustand an dem Träger (8) gesichert ist und in seinem Freigabezustand von dem Träger (8) trennbar ist.

5. Vorrichtung nach Anspruch 4, bei der
- der Träger (8) in den zweiten Sicherungsabschnitt (12') einführbar ist, und der zweite Sicherungsabschnitt (12') an dem Träger (8) verriegelbar, vorzugsweise diesen kraftschlüssig umschließend, ist, um seinen Sicherungszustand einzunehmen, und von dem Träger (8) entriegelbar, vorzugsweise durch Beendigung des Kraftschlusses, ist, um seinen Freigabezustand einzunehmen, oder
- der zweite Sicherungsabschnitt (12') in den Träger (8) einbringbar ist,
- der zweite Sicherungsabschnitt (12') in dem Träger (8) verriegelbar, vorzugsweise verspannbar, ist, um seinen Sicherungszustand einzunehmen, und in dem Träger (8) entriegelbar, vorzugsweise entspannbar, ist, um seinen Freigabezustand einzunehmen.

6. Vorrichtung nach einem der vorherigen Ansprüche, bei der
die Steuerung (14, 38) ausgelegt ist, bei einer Berechtigung eines Benutzers den ersten Sicherungsabschnitt (12) in seinen Freigabezustand zu bringen, wobei der zweite Sicherungsabschnitt (12') in seinem Sicherungszustand bleibt, oder den zweiten Sicherungsabschnitt (12') in seinen Freigabezustand zu bringen, wobei der erste Sicherungsabschnitt (12) in seinem Sicherungszustand bleibt.

7. Vorrichtung nach einem der vorherigen Ansprüche, mit
- einer Eingabeeinheit (16) zur Eingabe von Daten und/oder Informationen, die eine Berechtigung eines Benutzers der Schusswaffe angeben, und/oder
- einer Ausgabeeinheit (18) zur Ausgabe von Daten und/oder Informationen an einen Benutzer.

8. Sicherungseinheit zur gesicherten Aufbewahrung einer Schusswaffe an einer Basis, mit
- einem ersten Sicherungsabschnitt (12), der
in einen Lauf und/oder ein Patronenlager der Schusswaffe einbringbar ist, und
in einen Sicherungszustand zur Sicherung in der Schusswaffe und in einen Freigabezustand zur Freigabe von der Schusswaffe bringbar ist, **gekennzeichnet durch** einem zweiten Sicherungsabschnitt (12'), der in einen Sicherungszustand zur Sicherung an der Basis und in einen Freigabezustand zur Freigabe von der Basis bringbar ist.

9. Sicherungseinheit nach Anspruch 8, bei der
- der zweite Sicherungsabschnitt (12') eine Ausnehmung (42) aufweist, in die ein mit der Basis verbundenen Träger eingeführt werden kann, und an dem Träger verriegelbar, vorzugsweise diesen kraftschlüssig umschließend, ist, um seinen Sicherungszustand einzunehmen, und von dem Träger entriegelbar, vorzugsweise durch Beendigung des Kraftschlusses, ist, um seinen Freigabezustand einzunehmen, oder
- der zweite Sicherungsabschnitt (12') in einen mit der Basis verbundenen Träger (8) einbringbar ist und in dem Träger (8) verriegelbar, vorzugsweise verspannbar, ist, um seinen Sicherungszustand einzunehmen, und in dem Träger (8) entriegelbar, vorzugsweise entspannbar, ist, um seinen Freigabezustand einzunehmen.

10. Sicherungseinheit nach Anspruch 8 oder 9, ferner mit
einer Steuereinheit (38), die ausgelegt ist, bei einer Berechtigung eines Benutzers den ersten Sicherungsabschnitt (12) in seinen Freigabezustand zu bringen, wobei der zweite Sicherungsabschnitt (12') in seinem Sicherungszustand bleibt, oder den zweiten Sicherungsabschnitt (12') in seinen Freigabezustand zu bringen, wobei der erste Sicherungsabschnitt (12) in seinem Sicherungszustand bleibt.

11. Sicherungseinheit nach einem der Ansprüche 8 bis 10, mit
- einem Aktor (34), der mit dem ersten Sicherungsabschnitt (12) gekoppelt ist, um diesen wahlweise in seinen Sicherungszustand und seinen Freigabezustand zu bringen, und/oder
- einem Aktor (34') der dem zweiten Sicherungsabschnitt (12') zugeordnet ist, um diesen wahlweise in seinen Sicherungszustand und seinen Freigabezustand zu bringen.

## Claims

1. Device for the storage of a gun
- a base (2),
- a securing unit (6) for the secure storage of the gun on the base (2), and
- a controller (14, 38), wherein
- the securing unit (6) can be inserted at least partially into the barrel and/or the cartridge chamber of the gun, **characterized by**
a first securing section (12), which can be brought into a securing state, in which the securing unit (6) is secured in the gun, and into a release state, in which the securing unit (6) can be separated from the gun, and
- the controller (14, 38) brings the first securing section (12) into its release state when a user authorization is received to separate the gun and the securing unit (6).

2. Device in accordance with claim 1, wherein
- the securing unit (6) is permanently connected with the base (2).

3. Device in accordance with claim 1, wherein
the securing unit (6) comprises a second securing section (12'), which can also be brought into a securing state, in which the securing unit (6) is secured to the base (2), and into a release state, in which the second securing section (12') can be released from the base (2).

4. Device in accordance with claim 3, wherein
- the base (2) has a support (8) permanently connected to it, and
- the second securing section (12') is secured in its securing state on the support (8) and can be separated from the support (8) in its release state.

5. Device in accordance with claim 4, wherein
- the support (8) can be inserted into the second securing section (12') and the second securing section (12') can be locked on the support (8), preferably by surrounding it in a force-locking manner, in order to assume its securing state, and can be unlocked from the support (8), preferably through the termination of the frictional connection, in order to assume its release state, or
- the second securing section (12') can be inserted into the support (8),
- the second securing section (12') can be locked in the support (8), preferably by bracing, in order to assume its securing state and can be unlocked in the support (8), preferably by releasing, in order to assume its release state.

6. Device in accordance with one of the preceding claims, wherein
the controller (14, 38) is adapted, in the case of a user authorization, to bring the first securing section (12) into its release state wherein the second securing section (12') remains in its securing state, or to bring the second securing section (12') into its release state, wherein the first securing section (12) remains in its securing state.

7. Device in accordance with one of the preceding claims with
- an input unit (16) for input of data and/or information specifying a user authorization, and/or
- output unit (18) for output of data and/or information to a user.

8. Securing unit for the secure storage of a gun on a base with
- a first securing section (12), which
can be inserted into a barrel and/or a cartridge chamber of the gun, and
can be brought into a securing state for securing in the gun and into a release state for the release of the gun, **characterized by** a second securing section (12'), which can be brought into a securing state for securing on the base and into a release state for the release from the base.

9. Securing unit in accordance with claim 8, wherein
- the second securing section (12) comprises a recess (42), into which a support connected with the base can be inserted, and can be locked on the support, preferably by surrounding it in a force-locking manner, in order to assume its securing state, and can be unlocked from the support, preferably through the termination of the frictional connection, in order to assume its release state, or
- the second securing section (12') can be inserted into a support connected with the base and can be locked in the support, preferably by bracing, in order to assume its securing state and can be unlocked in the support, preferably by releasing, in order to assume its release state.

10. Safety unit in accordance with claim 8 or 9, further with
a control unit (38), which is adapted to, in the case of an authorization from a user, to bring the first securing section (12) into its release state, wherein the second securing section (12') remains in its securing state, or to bring the second securing section (12') into its release state, wherein the first securing section (12) remains in its securing state.

11. Safety unit in accordance with one of the claims 8 to 10, with
- an actuator (34), which is coupled with the first securing section (12), in order to selectively bring the first securing section (12) into its securing state and its release state, and/or
- an actuator (34'), which is associated to the second securing section (12'), in order to selectively bring the second securing section (12') into its securing state and its release state.

## Revendications

1. Dispositif pour la conservation d'une arme à feu, avec
- une base (2),
- une unité de sécurité (6) pour la conservation sécurisée de l'arme à feu à la base (2), et
- une commande (14, 3 8), dans lequel
- l'unité de sécurité (6)
est au moins partiellement insérable dans un canon et/ou une chambre à cartouche de l'arme à feu, **caractérisé par**
- une première section de sécurité (12) qui est transférable dans un état de sécurité, dans lequel l'unité de sécurité (6) est sécurisée dans l'arme à feu, et dans un état de déclenche, dans lequel l'unité de sécurité (6) est séparable de l'arme à feu, et
- en ce qui la commande (14, 38), lors d'une autorisation d'un utilisateur de déclencher l'arme à feu et l'unité de sécurité (6), transfert la première section de sécurité (12) dans son état de déclenche.

2. Dispositif selon la revendication 1, dans lequel
l'unité de sécurité (6) est solidaire de la base (2).

3. Dispositif selon la revendication 1, dans lequel
l'unité de sécurité (6) comprend une seconde section de sécurité (12'), qui est également transférable dans un état de sécurité, dans lequel l'unité de sécurité (6) est sécurisée à la base (2), et dans un état de déclenche, dans lequel la seconde section de sécurité (12') peut être déclenchée de la base (2).

4. Dispositif selon la revendication 3, dans lequel
- la base (2) comporte un support (8) solidaire d'elle et
- la seconde section de sécurité (12') est sécurisée dans son état de sécurité au support (8) et séparable du support (8) dans son état de déclenche.

5. Dispositif selon la revendication 4, dans lequel
- le support (8) est introduisable dans la seconde section de sécurité (12') et la seconde section de sécurité (12') est verrouillable au support (8), de préférence entourant celui-ci de force, pour occuper son état de sécurité, et déverrouillable du support (8), de préférence par l'arrêt de l'adhérence de force, pour occuper son état de déclenche, ou
- la seconde section de sécurité (12') est insérable dans le support (8),
- la seconde section de sécurité (12') est verrouillable, de préférence tendable, dans le support (8) pour occuper son état de sécurité, et déverrouillable, de préférence détendable, dans le support (8), pour occuper son état de déclenche.

6. Dispositif selon l'une des revendications précédentes, dans lequel
la commande (14, 38) est adaptée, lors d'une autorisation d'un utilisateur, à transférer la première section de sécurité (12) dans son état de déclenche, la seconde section de sécurité (12') demeurant dans son état de sécurité, ou à transférer la seconde section de sécurité (12') dans son état de déclenche, la première section de sécurité (12) demeurant dans son état de sécurité.

7. Dispositif selon l'une des revendications précédentes, avec
- une unité d'entrée (16) pour l'entrée de données et/ou d'informations indiquant une autorisation d'un utilisateur de l'arme à feu, et/ou
- une unité de sortie (18) pour la sortie de données et/ou d'informations à un utilisateur.

8. Unité de sécurité pour la conservation sécurisée d'une arme à feu à une base, avec
- une première section de sécurité (12), qui
est insérable dans un canon et/ou une chambre à cartouche de l'arme à feu, et qui
est transférable dans un état de sécurité pour la sécurisation dans l'arme à feu et dans un état de déclenche pour la déclenche de l'arme à feu, **caractérisée par** une seconde section de sécurité (12') qui est transférable dans un état de sécurité pour la sécurisation à la base et dans un état de déclenche pour la déclenche de la base.

9. Unité de sécurité selon la revendication 8, dans laquelle
- la seconde section de sécurité (12') comporte une exclusion (42), dans laquelle un support solidaire de la base peut être introduit et qui est verrouillable au support, de préférence entourant celui-ci de force, pour occuper son état de sécurité et qui est déverrouillable du support, de préférence par l'arrêt de l'adhérence de force, pour occuper son état de déclenche, ou
- la seconde section de sécurité (12') est insérable dans un support (8) solidaire de la base et verrouillable, de préférence tendable, dans le support (8), pour occuper son état de sécurité, et qui est déverrouillable, de préférence détendable, dans le support (8) pour occuper son état de déclenche.

10. Unité de sécurité selon revendication 8 ou 9, en outre avec
une unité de sécurité (38) qui est adaptée, lors d'une autorisation d'un utilisateur, à transférer la première section de sécurité (12) dans son état de déclenche, la seconde section de sécurité (12') demeurant dans son état de sécurité, ou de transférer la seconde section de sécurité (12') dans son état de déclenche, la première section de sécurité (12) demeurant dans son état de sécurité.

11. Unité de sécurité selon l'une des revendications 8 à 10, avec
- un acteur (34) couplé à la première section de sécurité (12) pour transférer celle-ci sélectivement dans son état de sécurité et son état de déclenche, et/ou
- un acteur (34') attribué à la seconde section de sécurité (12') pour transférer celle-ci sélectivement dans son état de sécurité et son état de déclenche.
